# EUROPEAN PATENT APPLICATION

(11) **EP 4 460 013 A1**
(43) Date of publication of application: **06.11.2024**
(21) Application number: 23760375.8
(22) Date of filing: 22.02.2023
(51) Int. Cl.: H04N 21/4788, H04N 21/482, H04N 21/4725, H04N 21/414, H04N 21/431, G06K 19/06

(54) **ELECTRONIC DEVICE FOR PROVIDING CHAT ROOM SERVICE, AND OPERATION METHOD THEREFOR**

(30) Priority: 22.02.2022 KR 20220023208
(71) Applicant: Samsung Electronics Co., Ltd, Suwon-si, Gyeonggi-do 16677 (KR)
(72) Inventor: YUN, Byoungho, Suwon-si, Gyeonggi-do 16677 (KR); KIM, Jieun, Suwon-si, Gyeonggi-do 16677 (KR); KIM, Jinhong, Suwon-si, Gyeonggi-do 16677 (KR); KIM, Chansung, Suwon-si, Gyeonggi-do 16677 (KR); PARK, Yeseul, Suwon-si, Gyeonggi-do 16677 (KR); BAE, Heejeong, Suwon-si, Gyeonggi-do 16677 (KR); LEE, Seunghoon, Suwon-si, Gyeonggi-do 16677 (KR); JEON, Eunsang, Suwon-si, Gyeonggi-do 16677 (KR); JOO, Soyeon, Suwon-si, Gyeonggi-do 16677 (KR)
(74) Representative: Appleyard Lees IP LLP
(86) International application number: PCT/KR2023/002524
(87) International publication number: WO 2023/163501

(57) **Abstract**

An electronic device and an operation method thereof are provided. The electronic device includes a communication interface, a memory storing one or more instructions, and a processor configured to execute the one or more instructions stored in the memory to recognize a program associated with content to be displayed, request, through the communication interface, a server for information about a chat room corresponding to a program identity (ID) of the recognized program, and output, based on the information about the chat room being obtained from the server in response to the request, a user interface to allow control as to whether to execute the chat room corresponding to the program ID of the recognized program while the content is being displayed.

## Description

### TECHNICAL FIELD

The disclosure relates to an electronic device and an operation method thereof, and more particularly, to an electronic device for providing a chat room service while displaying content, and an operation method of the electronic device.

### BACKGROUND ART

Live programs viewable on a display such as a television (TV) are currently being provided via a radio frequency (RF) network or a set-top box. There have been a steady increase in the need for users to share their opinions with other users while watching programs with them. Until now, in order to service their needs, a separate device has been used independently of a device for viewing a live program, and a chat application or browser has been provided by each service provider. Therefore, in order to use services, such as chatting, which allow a user to share opinions while watching a live program, the user is eventually inconvenienced in having to directly tune a device, such as a TV, for viewing the live program to a desired channel and directly run a service application or browser having a function of exchanging opinions to find and access a corresponding location.

### DESCRIPTION OF EMBODIMENTS

### TECHNICAL PROBLEM

The disclosure provides an electronic device and an operation method thereof that enable a user to simply and conveniently use a chat room corresponding to live content that the user is viewing.

### SOLUTION TO PROBLEM

According to an embodiment of the disclosure, an electronic device includes a communication interface, a memory storing one or more instructions, and a processor configured to execute the one or more instructions stored in the memory to recognize a program associated with content to be displayed, request, through the communication interface, a server for information about a chat room corresponding toa program identity (ID) of the recognized program, and output, based on the information about the chat room being obtained from the server in response to the request, a user interface to allow control as to whether to execute the chat room corresponding to the program ID of the recognized program while the content is being displayed.

According to an embodiment of the disclosure, the processor may be further configured to execute the one or more instructions to receive, through the user interface, a user input requesting execution of the chat room, transmit, to the server, a request to join the chat room according to the user input, and receive, from the server, a join response indicating joining of the chat room.

According to an embodiment of the disclosure, the processor may be further configured to execute the one or more instructions to perform, by referring to an endpoint included in the join response, a communication connection to a chat room server that provides a chat room service in association with the chat room.

According to an embodiment of the disclosure, the processor may be further configured to execute the one or more instructions to, transmit, to the server, a request to create the chat room corresponding to the program ID when no information about the chat room is obtained from the server in response to the request, and obtain, in response to the request, information about the created chat room from the server.

According to an embodiment of the disclosure, the chat room corresponding to the program ID may be among one or more chat rooms and the processor may be further configured to execute the one or more instructions to control display of a chat room list including the one or more chat rooms, according to a user input selecting a chat room from the displayed chat room list, control entry to the selected chat room and change a current channel to a content channel corresponding to the selected chat room, and control display of the selected chat room while content provided on the content channel corresponding to the selected chat room is being displayed.

According to an embodiment of the disclosure, the processor may be further configured to execute the one or more instructions to, based on receiving, from the user, a request to share the chat room corresponding to the program ID, transmit, to the server, the request to share the chat room, receive, from the server, chat room access information to allow access to the chat room corresponding to the program ID, and transmit the received chat room access information to a mobile device that is to share the chat room.

According to an embodiment of the disclosure, the processor may be further configured to execute the one or more instructions to generate a quick response (QR) code based on a uniform resource locator (URL) included in the chat room access information, and control display of the generated QR code so that the generated QR code is capturable by the mobile device, and the QR code may be captured by the mobile device and is useable by the mobile device to transmit a join request to a chat room server.

According to an embodiment of the disclosure, the processor may be further configured to execute the one or more instructions to provide an icon that enables sharing of the chat room with another user, receive, from the server, chat room sharing information according to a user input for selecting the icon, and transmit the received chat room sharing information to an electronic device of the other user.

According to an embodiment of the disclosure, the chat room sharing information may include a URL generated based on the information about the chat room, and the URL may be transmitted to the electronic device of the other user via a mobile device of the user and a mobile device of the other user.

According to an embodiment of the disclosure, the processor may be further configured to execute the one or more instructions so that the program associated with the content is recognized by using at least one of automatic content recognition (ACR), context awareness, or program recognition using information included in metadata.

According to an embodiment of the disclosure, an operation method of an electronic device includes recognizing a program associated with content to be displayed, requesting a server for information about a chat room corresponding to a program identity (ID) of the recognized program, and outputting, based on the information about the chat room being obtained from the server in response to the request, a user interface to allow control as to whether to execute the chat room corresponding to the program ID of the recognized program while the content is being displayed.

According to an embodiment of the disclosure, a computer-readable recording medium has recorded thereon a program executed by a computer, the program including one or more instructions for performing an operation method of an electronic device, the operation method including recognizing a program associated with content to be displayed, requesting a server for information about a chat room corresponding to a program identity (ID) of the recognized program, and based on obtaining the information about the chat room from the server in response to the request, outputting, while displaying the content, a user interface to allow control as to whether to execute the chat room corresponding to the program ID of the recognized program while the content is being displayed.

### ADVANTAGEOUS EFFECTS OF DISCLOSURE

According to various embodiments of the disclosure, while a user is watching a live program provided through an antenna, a set-top box, a display device manufacturer's own service, or the like, when there is an opinion sharing service associated with the live program, the user is able to easily access the opinion sharing service and share his or her opinions with various users. This is achieved by matching the opinion sharing service with live content that is being played in real time based on program identity (ID) in metadata of the live content.

Furthermore, according to embodiments of the disclosure, the user may use a service on a corresponding display device and relatively easily input a message using his/her mobile device. In addition, by sharing a corresponding chat room with other users via a social networking service (SNS), etc., it is possible to provide a venue for easily sharing opinions with the other users while watching the same live program.

### BRIEF DESCRIPTION OF DRAWINGS

FIG. 1 is a reference diagram for describing a concept of a system capable of providing, while displaying content on an electronic device, a chat room service corresponding to the content, according to an embodiment of the disclosure.
FIG. 2 is a reference diagram for describing a system for creating a chat room, according to an embodiment of the disclosure.
FIG. 3 is an example of a schematic block diagram of a service server according to an embodiment of the disclosure.
FIG. 4 is a flowchart of a process, performed by a service server, of creating a chat room, according to an embodiment of the disclosure.
FIG. 5 illustrates an example of program identity (ID)-based chat room information according to an embodiment of the disclosure.
FIG. 6 is a flowchart of a process, performed by a service server, of processing chat room join, according to an embodiment of the disclosure.
FIG. 7 is a reference diagram for describing a path through which users' conversation contents are transmitted after joining a chat room, according to an embodiment of the disclosure.
FIG. 8 is a schematic block diagram of an electronic device according to an embodiment of the disclosure.
FIG. 9 is a detailed block diagram of an electronic device according to an embodiment of the disclosure.
FIG. 10 is a functional block diagram of an electronic device that performs an operation of recognizing a program for displayed content and inducing entry to a chat room corresponding to the program, according to an embodiment of the disclosure.
FIG. 11 is a flowchart illustrating an example of a process for a method, performed by an electronic device, of inducing entry to a chat room by recognizing displayed content, according to an embodiment of the disclosure.
FIG. 12 illustrates an example of a user interface for inquiring whether to join a chat room created in correspondence to content that is automatically recognized while being displayed by an electronic device, according to an embodiment of the disclosure.
FIG. 13 is a flowchart illustrating another example of a method, performed by an electronic device, of inducing entry to a chat room by recognizing displayed content, according to an embodiment of the disclosure.
FIG. 14 illustrates an example of a user interface for inquiring whether to create a chat room corresponding to content that is automatically recognized while being displayed by an electronic device, according to an embodiment of the disclosure.
FIG. 15 is a flowchart illustrating an example of a method, performed by an electronic device, of displaying a chat room list, selecting a chat room from the displayed chat room list, and inducing entry to the chat room, according to an embodiment of the disclosure.
FIG. 16 illustrates an example of a chat room list execution icon displayed on a portion of a display screen of an electronic device.
FIG. 17 illustrates examples of a chat room list displayed by an electronic device, according to an embodiment of the disclosure.
FIG. 18 illustrates another example of a chat room list displayed by an electronic device, according to an embodiment of the disclosure.
FIG. 19 is a functional block diagram of an electronic device and a mobile device for sharing chat room information, according to an embodiment of the disclosure.
FIG. 20 is a flowchart illustrating an example of a process of operations of sharing a chat room, according to an embodiment of the disclosure.
FIG. 21 is a reference diagram for describing an example of inputting a chat message to a chat room by using a mobile device by completing chat room sharing, according to an embodiment of the disclosure.
FIG. 22 is a reference diagram for describing a method of sharing a chat room between users' electronic devices, according to an embodiment of the disclosure.
FIG. 23 is a flowchart illustrating an example of a process of sharing a chat room between users' electronic devices, according to an embodiment of the disclosure.
FIG. 24 is a functional block diagram of devices for performing a chat room sharing operation as illustrated in FIG. 22, according to an embodiment of the disclosure.

### MODE OF DISCLOSURE

Terms used in the present specification will now be briefly described and then the disclosure will be described in detail.

As the terms used herein, general terms that are currently widely used are selected by taking functions according to the disclosure into account, but the terms may have different meanings according to the intention of one of ordinary skill in the art, precedent cases, or advent of new technologies. Furthermore, specific terms may be arbitrarily selected by the applicant, and in this case, the meaning of the selected terms will be described in detail in the detailed description of the disclosure. Thus, the terms used herein should be defined not by simple appellations thereof but based on the meaning of the terms together with the overall description of the disclosure.

Throughout the specification, when a part "includes" or "comprises" an element, unless there is a particular description contrary thereto, it is understood that the part may further include other elements, not excluding the other elements. In addition, terms such as "portion", "module", etc., described in the specification refer to a unit for processing at least one function or operation and may be embodied as hardware or software, or a combination of hardware and software.

Embodiments of the disclosure will now be described more fully hereinafter with reference to the accompanying drawings so that they may be easily implemented by one of ordinary skill in the art. However, embodiments of the disclosure may have different forms and should not be construed as being limited to the embodiments set forth herein. In addition, parts not related to descriptions of the disclosure are omitted to clearly explain embodiments of the disclosure in the drawings, and like reference numerals denote like elements throughout.

In an embodiment of the disclosure set forth herein, the term "user" refers to a person who controls a function or operation of a computing apparatus or an electronic device by using a control device, and may include a viewer, an administrator, or an installation engineer.

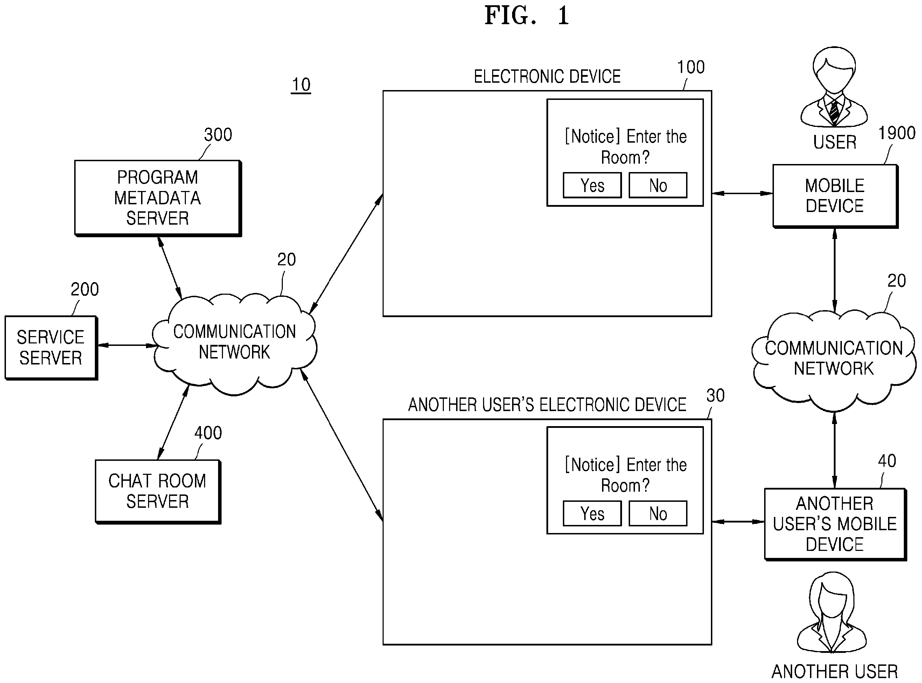

FIG. 1 is a reference diagram for describing a concept of a system capable of providing, while displaying content on an electronic device, a chat room service corresponding to the content, according to an embodiment of the disclosure.

Referring to FIG. 1, a system 10 may include an electronic device 100, a service server 200, a program metadata server 300, a chat room server 500, a mobile device 1900, another user's electronic device 30, and another user's mobile device 40, all of which are capable of communicating with one another over a communication network 20.

While displaying content according to a user's request, the electronic device 100 may provide a chat room service corresponding to the displayed content. According to an embodiment of the disclosure, the electronic device 100 may be a television (TV) but is not limited thereto, and may be implemented as a device that includes a memory and a processor and displays an image according to a user's request. For example, the electronic device 100 may be implemented as various electronic devices, such as a tablet personal computer (PC), a digital camera, a camcorder, a laptop computer, a desktop computer, an e-book terminal, a digital broadcasting terminal, a personal digital assistant (PDA), a portable multimedia player (PMP), a navigation device, an MP3 player, a wearable device, etc. In addition, the electronic device 100 may be implemented in a fixed or portable form, and may be a digital broadcasting receiver capable of receiving digital broadcasts. The term "electronic device" is used to distinguish the electronic device 100 from the mobile device 1900 included in the system 10, and any type of device that performs functions of the electronic device 100 in the disclosure may be referred to as a display device, a computing device, or the like.

According to an embodiment of the disclosure, while displaying content, the electronic device 100 may inquire of the service server 200 as to whether a chat room corresponding to the displayed content exists. In detail, while displaying the content, the electronic device 100 may identify program identity (ID) corresponding to the content by recognizing the displayed content and transmit, by using the identified program ID, a message inquiring of the service server 200 as to whether a chat room corresponding to the program ID exists. When receiving, from the service server 200, a response to the inquiry, which indicates that the chat room corresponding to the program ID exists, the electronic device 100 may output a user interface for inquiring whether to join the chat room.

According to an embodiment of the disclosure, when receiving a user input for joining the chat room corresponding to the program ID, the electronic device 100 may transmit a chat room join request to the service server 200, and receive a chat room join response from the service server 200 as a reply thereto. Accordingly, the electronic device 100 may establish a communication connection with the chat room server 400 by using the chat room join response, and accordingly, receive chat room details regarding the joined chat room from the chat room server 400. The chat room details may include conversation contents input by one or more other users who have joined the chat room.

According to an embodiment of the disclosure, as a result of, by using by using the program ID of the displayed content, inquiring of the service server 200 as to whether a chat room corresponding to the program ID exists, when the electronic device 100 receives, from the service server 200, a response indicating that the chat room corresponding to the program ID does not exist, the electronic device 100 may transmit a request for creation of a chat room to the service server 200. The electronic device 100 may then receive, as a reply thereto, a response indicating that creation of the chat room is completed from the service server 200.

According to an embodiment of the disclosure, the electronic device 100 may request a chat room list from the service server 200 according to a user input for requesting the chat room list, and display the chat room list received from the service server 200. The chat room list may include information about one or more joinable chat rooms. The electronic device 100 may transmit, according to a user input for selecting a chat room from the chat room list, a request to join the selected chat room to the service server 200 and control a channel currently being displayed on a display to be changed to a live content channel corresponding to the selected chat room. Accordingly, while displaying live content provided by the live content channel, the electronic device 100 may display the chat room corresponding to the live content.

According to an embodiment of the disclosure, the electronic device 100 may transmit, according to a user input for requesting chat room sharing, a request to share the chat room to the service server 200, and receive chat room access information from the service server 200. By displaying the received chat room access information, the electronic device 100 may enable the mobile device 1900 to obtain the displayed chat room access information. The mobile device 1900 may share the chat room by establishing a communication connection with the chat room server 400 based on the obtained chat room access information.

The service server 200 may represent a server computer responsible for providing a chat room service to the electronic device 100 and managing the chat room service in its entirety.

According to an embodiment of the disclosure, when receiving a request for creation of a chat room corresponding to content from the electronic device 100, the service server 200 may create the chat room based on a program ID corresponding to the content. In detail, the service server 200 may obtain program information corresponding to the program ID by using program metadata provided by the program metadata server 300. Furthermore, the service server 200 may request the chat room server 400 to create a chat room using a chat room ID, and accordingly, receive, from the chat room server 400, chat room access information regarding the created chat room. The service server 200 may complete creation of the chat room by generating chat room information including the program ID, the program information, and the chat room access information.

According to an embodiment of the disclosure, when receiving a chat room join request from the electronic device 100, the service server 200 may transmit, to the electronic device 100, chat room access information regarding a chat room of which joining is requested.

According to an embodiment of the disclosure, when receiving a chat room sharing request from the electronic device 100, the service server 200 may transmit, to the electronic device 100, chat room information regarding a chat room of which sharing is requested.

The program metadata server 300 may represent a server computer that provides the service server 200 with program metadata corresponding to one or more contents provided by a particular content provider according to a request from the service server 200.

The chat room server 400 may create a chat room according to a request from the service server 200 and transmit chat room access information regarding the created chat room to the service server 200.

The chat room server 400 may register a user, i.e., the electronic device 100, with the chat room according to a chat room join request from the service server 200, and perform a communication connection with the electronic device 100. As the chat room server 400 establishes the communication connection with the electronic device 100, the chat room server 400 may transmit, to the electronic device 100, conversation contents input by other users to the chat room, and also receive, from the electronic device 100, conversation content input by the user of the electronic device 100 to the chat room.

The mobile device 1900 may represent a smart device capable of communicating with the electronic device 100 to receive chat room access information from the electronic device 100 and accessing the chat room server 400 by using the received chat room access information. Also, the mobile device 1900 may transmit the chat room access information to the other user's mobile device 40 by using a messenger application. The mobile device 1900 may be a smart phone but is not limited thereto, and may be implemented as a device that includes a memory and a processor and performs a function according to a user's request. For example, the mobile device 1900 may be implemented as various electronic devices, such as a mobile phone, a tablet PC, a digital camera, a camcorder, a laptop computer, a desktop computer, an e-book terminal, a digital broadcasting terminal, a PDA, a PMP, a navigation device, an MP3 player, a wearable device, etc. Also, the mobile device 1900 may be referred to as a portable device or a computing device according to the functionality of the mobile device 1900.

According to an embodiment of the disclosure, the mobile device 1900 may transmit the chat room access information to the other user's mobile device 40 over the communication network 20, and the other user's mobile device 40 may transmit the received chat room access information to the other user's electronic device 30 capable of communicating therewith.

The other user's electronic device 30 may access the service server 200 by using the obtained chat room access information and receive chat room information corresponding to the chat room access information from the service server 200. The other user's electronic device 30 may output a user interface for inquiring whether to join a corresponding chat room based on the received chat room information, and when receiving a user input for joining the chat room in response to the user interface, transmit a chat room join request to the service server 200.

In the related art, because it is not possible to accurately match a live program currently being viewed with a chat room for an opinion sharing service associated therewith, a user needs to directly and separately access a live program and services associated with the TV program, such as a chat application, and even when the user simultaneously uses a live TV program and a chat room associated with the live TV program on the same device, functions such as moving the user directly to the chat room may not be performed.

However, according to embodiments of the disclosures, while watching a live TV program, a user may use a chat room associated with the live TV program on the same device or even on another device, so that the user may move directly to a corresponding channel on a device where he or she is viewing the live TV program. In this way, while watching a live channel, the user may directly enter a service associated with a live program through a guide or the like informed by the device.

Furthermore, a chat room list associated with a live program may be displayed to a user on his or her own device by executing an application or the like, and when the user selects a chat room from the chat room list, the user may access the chat room and simultaneously move to a live program channel associated with the chat room. That is, an embodiment of the disclosure may provide a method that allows the user to use a chat room service simultaneously while watching a live program only by selecting the live program or a chat room associated therewith within the TV, both of which the user would otherwise have to access separately.

In addition, information may be shared among users in different regions or using different set-top boxes by using various methods, and through this information, the users may move to a channel of a shared TV program and simultaneously participate in a corresponding chat room. In other words, according to embodiments of the disclosure, because a chat room is created based on a program ID, regardless of whether users are in different geographic regions, whether they receive content from different broadcast providers, whether they use different set-top boxes, the users may simultaneously access a chat room based on a corresponding program ID as long as the chat room is related to the same program ID, so that convenience may be increased.

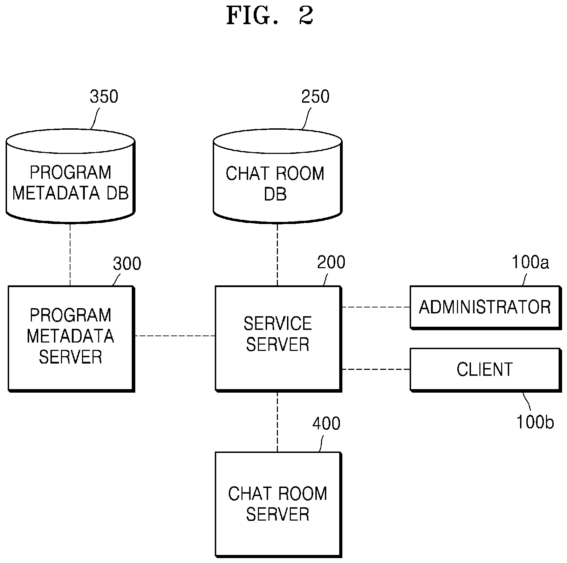

According to an embodiment of the disclosure, the service server 200 may create a chat room based on a program ID. Hereinafter, a method of creating a chat room is described with reference to FIGS. 2 to 5.

FIG. 2 is a reference diagram for describing a system for creating a chat room, according to an embodiment of the disclosure.

Referring to FIG. 2, an administrator 100a or a client 100b may transmit a request for creation of a chat room corresponding to a program to the service server 200. The administrator 100a may represent an administrator computer that manages a chat room service. The client 100b may represent a client module that is included in the electronic device 100 used by a specific user and communicates with the service server 200 to execute and manage a chat room service operation. The chat room created according to the request from the administrator 100a may be an open chat room joinable by any user. The chat room created according to the request from the client 100b may be a closed chat room joinable by only specific users. However, the disclosure is not limited thereto, and the chat room created according to the request from the client 100b may also be an open chat room.

The program metadata server 300 may maintain a program metadata database (DB) 350 that stores program metadata for contents provided by a particular content provider. The program metadata server 300 may provide program metadata for contents provided by the content provider to the service server 200 at regular intervals according to a request from the service server 200 or each time there is a request from the service server 200.

When the service server 200 receives a request for creation of a chat room corresponding to a certain program from the administrator 100 or the client 100b, the service server 200 may obtain metadata corresponding to the program from program metadata for contents received from the program metadata server 300, and obtain program information corresponding to the program by processing the obtained metadata.

The service server 200 may also request the chat room server 400 to create the chat room according to the request for creation of the chat room corresponding to the program and receive an endpoint for the created chat room from the chat room server 400. The endpoint may indicate access information for accessing the chat room on the chat room server 500.

The service server 200 may complete the creation of the chat room by matching the program information and the endpoint with the corresponding program ID according to the request for creation of the chat room corresponding to the program and then storing the match in the chat room DB 250.

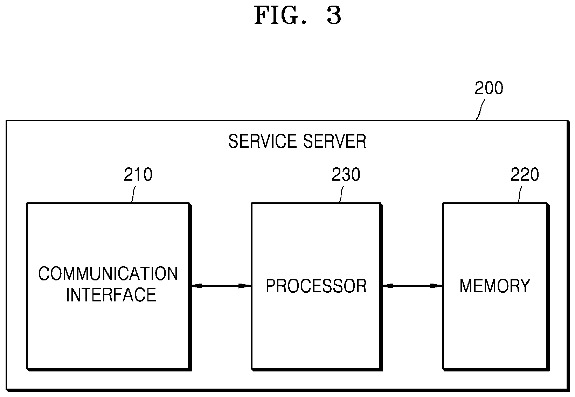

FIG. 3 is an example of a schematic block diagram of a service server according to an embodiment of the disclosure.

Referring to FIG. 3, a service server 200 may include a communication interface 210, a memory 220, and a processor 230.

The communication interface 210 may communicate with various devices, such as the electronic device 100 , the program metadata server 300, the chat room server 400, and the mobile device 1900 over the communication network 20.

The memory 220 may store programs necessary for processing or control operations performed by the processor 230, and store data input to or output from the service server 200.

The memory 220 may include at least one type of storage medium, i.e., at least one of a flash memory-type memory, a hard disk-type memory, a multimedia card micro-type memory, a card-type memory (e.g., an SD card or an XD memory), random access memory (RAM), static RAM (SRAM), read-only memory (ROM), electrically erasable programmable ROM (EEPROM), PROM, a magnetic memory, a magnetic disc, or an optical disc.

The processor 230 controls all operations of the service server 200. For example, the processor 230 may perform functions of the service server 200 described in the disclosure by executing one or more instructions stored in the memory 220.

In an embodiment of the disclosure, the processor 230 may control operations of the service server 200 to be performed by executing one or more instructions stored in the memory 220. In this case, the memory 220 may store one or more instructions executable by the processor 220.

According to an embodiment of the disclosure, by executing one or more instructions stored in the memory 220, the processor 230 may create a chat room based on a program ID according to a request from the electronic device 100.

According to an embodiment of the disclosure, by executing one or more instructions stored in the memory 220, the processor 230 may perform an operation of joining a user to a chat room according to a request from the electronic device 100.

According to an embodiment of the disclosure, by executing one or more instructions stored in the memory 220, according to a request from the electronic device 100, the processor 230 may generate a uniform resource locator (URL) based on chat room sharing information for transmission.

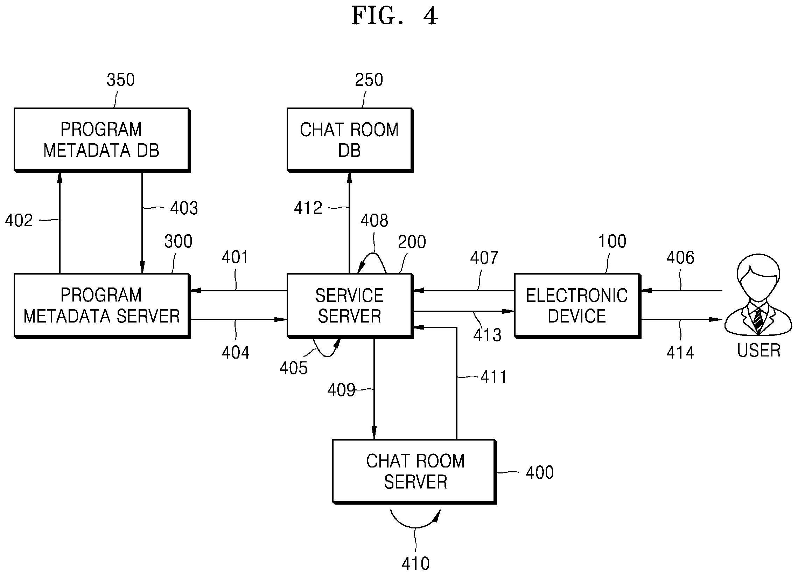

FIG. 4 is a flowchart of a process, performed by a service server, of creating a chat room, according to an embodiment of the disclosure.

Referring to FIG. 4, the service server 200 may fetch program metadata from the program metadata server 300. The service server 200 may fetch program metadata at regular intervals, e.g., once a day or whenever necessary at a specific time point. The service server 200 fetching program metadata from the program metadata server 300 may be performed in operations 401 to 404.

In operation 401, the service server 200 may request program metadata from the program metadata server 300. The service server 200 may request program metadata provided by a particular content provider. The content provider may be a terrestrial broadcaster or cable operator.

In operation 402, the program metadata server 300 may inquire about program metadata in the program metadata DB 350, and in operation 403, obtain the program metadata from the program metadata DB 350. In operation 404, the program metadata server 300 may then transmit the obtained program metadata to the service server 200.

In operation 405, the service server 200 may process the program metadata transmitted from the program metadata server 300 to extract, for each program ID, program information corresponding to a program ID. A program ID may represent a unique identifier for identifying a certain program. Program information may include a channel ID for identifying a channel on which a corresponding program is provided, information about a start time and an end time of the program, or the like.

In operation 406, the user may input a chat room creation request to the administrator computer 100a. In this case, the user may input the chat room creation request based on a program ID.

In operation 407, the administrator computer 100a may transmit, to the service server 200, the input chat room creation request based on the program ID.

In operation 408, the service server 200 may generate a chat room ID according to the chat room creation request received from the administrator computer 100a. The service server 200 may generate a chat room ID by combining pieces of information, such as a chat room name, the program ID, a channel ID, etc. The chat room name may be a name for identifying a chat room for the user when displaying the chat room. For example, the chat room name may be in the form of <Running Man chat room>.

In operation 409, the service server 200 may transmit, to the chat room server 400, the chat room creation request based on the chat room ID.

In operation 410, the chat room server 400 may create a corresponding chat room based on the chat room ID.

In operation 411, the chat room server 400 may transmit, to the service server 200, chat room information regarding the chat room created based on the chat room ID. The chat room information may include an endpoint as information for accessing the chat room having the chat room ID.

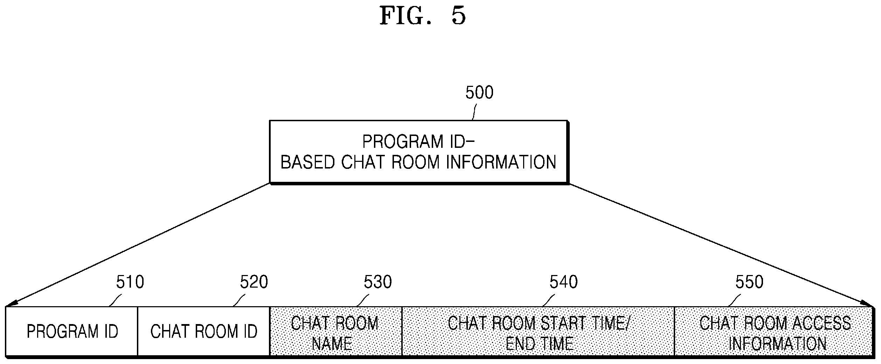

In operation 412, the service server 200 may store information about the created chat room in the chat room DB 250. The service server 200 may store chat room information corresponding to each program ID in the chat room DB 250. An example of program ID-based chat room information is shown in FIG. 5.

FIG. 5 illustrates an example of program ID-based chat room information according to an embodiment of the disclosure.

Referring to FIG. 5, the program ID-based chat room information 500 may include a program ID 510, a chat room ID 520, a chat room name 530, a chat room start time/end time 540, and chat room access information 550.

The program ID 510 may represent an identifier for identifying a corresponding program.

The chat room ID 520 may represent identification information for identifying a corresponding chat room and generated by combining pieces of information such as a chat room name, a program ID, a channel ID, etc.

The chat room name 530 may be a name for identifying the chat room for a user when displaying the chat room. For example, the chat room name may be in the form of <Running Man chat room>.

The chat room start time/end time 540 may indicate the time when the corresponding chat room is started and the time when the chat room is ended. Because this chat room runs while the program having the corresponding program ID is displayed, the start time of the chat room may be the same as start time of the corresponding program, and the end time of the chat room may be the same as end time of the program. The service server 200 may obtain the start time and end time of the program by referring to program schedule information, and determine the start time and end time of the chat room by using the start time and end time of the program.

The chat room access information 550 is information used when accessing the chat room having the corresponding chat room ID provided in the chat room server 400, and may include, for example, an endpoint.

Returning back to FIG. 4, in operation 413, the service server 200 may transmit a response indicating that creation of the chat room is completed to the administrator computer 100a, and in operation 414, the administrator computer 100a may output a message indicating that creation of the chat room is completed to the user.

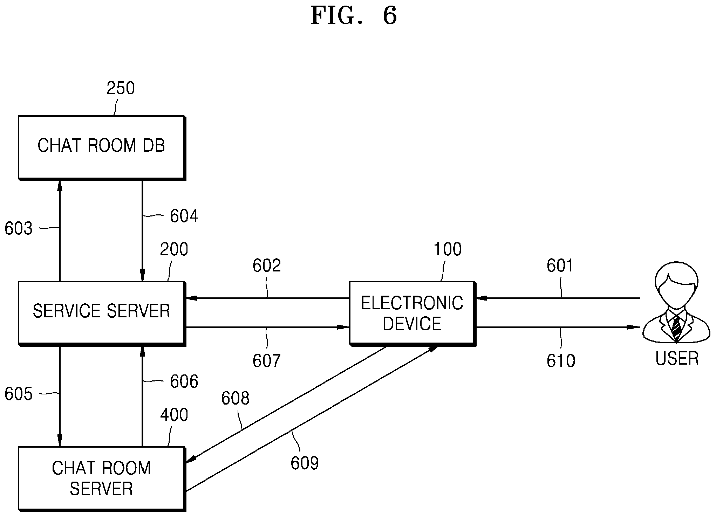

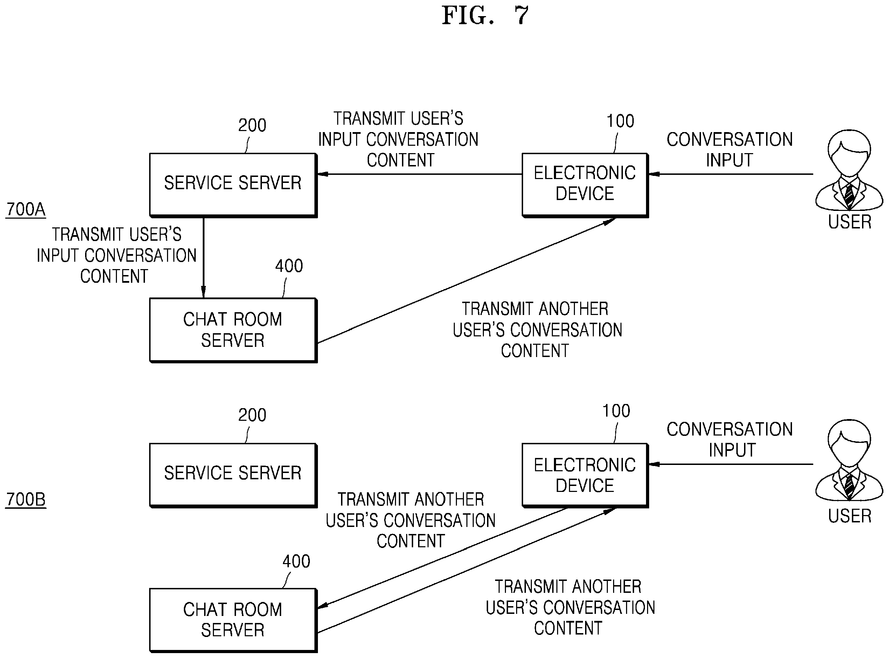

According to an embodiment of the disclosure, the service server 200 may join the user to the chat room based on the program ID. Hereinafter, a method of creating a chat room is described with reference to FIGS. 6 and 7.

FIG. 6 is a flowchart of a process, performed by a service server, of processing chat room join, according to an embodiment of the disclosure.

Referring to FIG. 6, in operation 601, the user may input a user input for joining a chat room associated with corresponding content to the electronic device 100 while the content is displayed on the electronic device 100.

In operation 602, the electronic device 100 may transmit a chat room join request input by the user to the service server 200. The chat room join request may include account information of the user, i.e., account information of the electronic device 100 and information about a program ID of content currently being displayed on the electronic device 100.

In operation 603, by using a program ID included in the chat room join request received from the electronic device 100, the service server 200 may perform an operation of inquiring a chat room corresponding to the program ID in the chat room DB 250.

In operation 604, the service server 200 may obtain, from the chat room DB 250, chat room information corresponding to the program ID in the chat room join request. As described with reference to FIG. 5, the chat room information corresponding to the program ID may include a chat room ID, a chat room name, a chat room start time/end time, and chat room access information.

In operation 605, by using the chat room ID included in the chat room information that corresponds to the program ID and is obtained from the chat room DB 250 and the account information of the user who has transmitted the chat room request, the service server 200 may transmit, to the chat room server 400, a request to register a user account as a member in a chat room corresponding to the chat room ID.

In operation 606, the service server 200 may receive a response indicating successful member registration from the chat room server 400.

In operation 607, when receiving the response indicating successful member registration from the chat room server 400, the service server 200 may transmit, to the electronic device 100, chat room access information for accessing a chat room of which joining is requested. The chat room access information may include, for example, an endpoint.

In operation 608, the electronic device 100 may receive the chat room access information from the service server 200 and transmit a communication connection request to the chat room server 400 by using the received chat room access information. For example, the electronic device 100 may make a socket connection to the chat room server 400 by using an endpoint included in the chat room access information.

In operation 609, the chat room server 400 may transmit a response to the communication connection request to the electronic device 100, e.g., a response indicating that a socket is opened.

In operation 610, after receiving the response to the communication connection request from the chat room server 400, the electronic device 100 may output a message indicating that the chat room join is completed to the user.

When the communication connection between the electronic device 100 and the chat room server 400 is completed as described above, the electronic device 100 may transmit conversation content input by the user to the chat room directly to the chat room server 400, and the chat room server 400 may also transmit conversation contents input by other users directly to the electronic device 100.

FIG. 7 is a reference diagram for describing a path through which users' conversation contents are transmitted after joining a chat room, according to an embodiment of the disclosure.

Referring to 700A of FIG. 7, when a user performs a conversation input to a chat room after joining the chat room, the electronic device 100 may transmit, to the service server 200, the user's conversation content that is input, and the service server 200 may transmit the received user's conversation content to the chat room server 400.

In addition, the chat room server 400 may directly transmit another user's conversation content that is input to the electronic device 100.

As described above, by receiving the user's conversation content that is input from the electronic device 100 and transmitting it to the chat room server 400, such a conversation input processing operation is very time consuming, but the service server 200 is able to collect information about users due to accumulation of conversation contents input by users therein.

Referring to 700B of FIG. 7, when the user performs a conversation input to a chat room after joining the chat room, the electronic device 100 may transmit the user's conversation content that is input directly to the chat room server 400.

Furthermore, the chat room server 400 may transmit another user's conversation content that is input directly to the electronic device 100.

As described above, because a user's conversation input processing operation is performed only between the electronic device 100 and the chat room server 400 without the intervention of the service server 200, the load on the service server 200 may be reduced.

Although FIG. 7 shows that the chat room server 400 exists separately outside the service server 200, in a case where the service server 200 has sufficient performance and resources to perform the operation of the chat room server 400, the service server 200 may be implemented to include the chat room server 400.

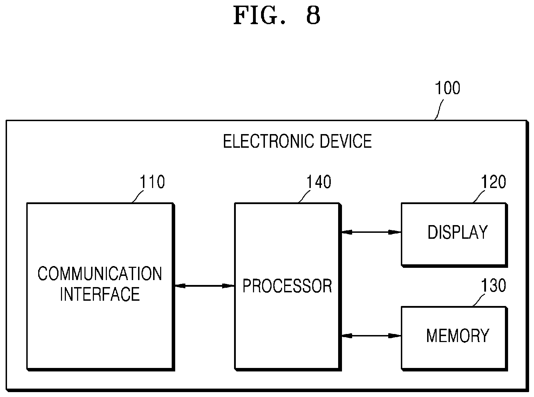

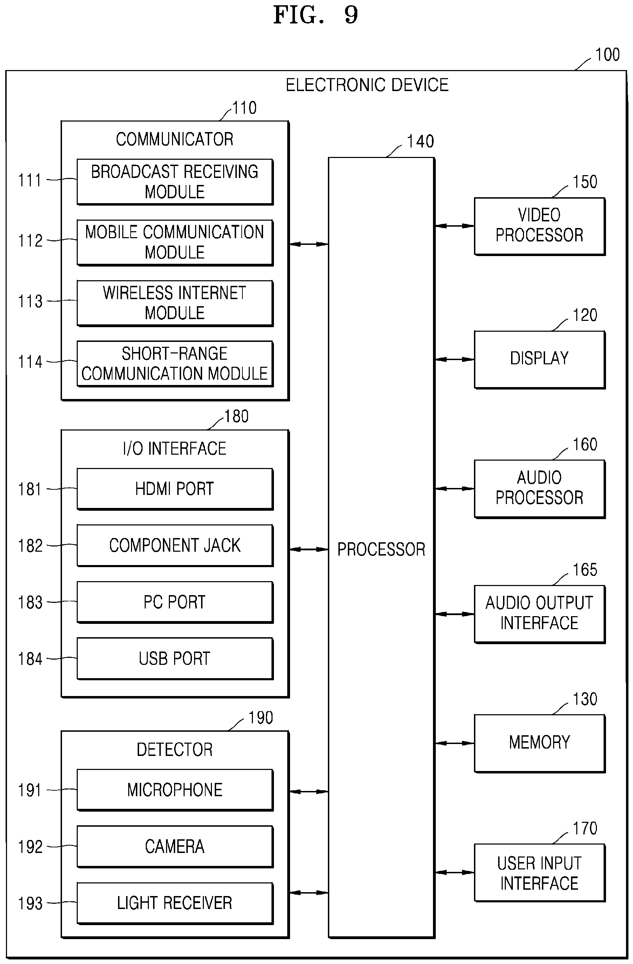

A configuration of an electronic device is now described with reference to FIGS. 8 and 9.

FIG. 8 is a schematic block diagram of an electronic device according to an embodiment of the disclosure.

Referring to FIG. 8, the electronic device 100 may include a communication interface 110, a display 120, a memory 130, and a processor 140.

The display 120 may output an image or data processed by the electronic device 100. As shown in FIG. 8, the display 120 may be included in the electronic device 100, or may be located outside the electronic device 100 like an external display device connected to the electronic device 100. For example, the electronic device 100 may be a set-top box, and the display 120 may have a form such as a TV connected to the set-top box.

The memory 130 may store programs necessary for processing or control by the processor 140, and store data input to or output from the electronic device 100.

The memory 130 may include at least one type of storage medium, i.e., at least one of a flash memory-type memory, a hard disk-type memory, a multimedia card micro-type memory, a card-type memory (e.g., an SD card or an XD memory), RAM, SRAM, ROM, EEPROM, PROM, a magnetic memory, a magnetic disc, or an optical disc.

The processor 140 controls all operations of the electronic device 100. For example, the processor 140 may perform functions of the electronic device 100 described in the disclosure by executing one or more instructions stored in the memory 130.

In an embodiment of the disclosure, the processor 140 may control operations of the electronic device 100 to be performed by executing one or more instructions stored in the memory 130. In this case, the memory 130 may store one or more instructions executable by the processor 140.

Also, in an embodiment of the disclosure, the processor 140 may store one or more instructions in an internal memory provided therein and execute the one or more instructions stored in the internal memory to control the above-described operations to be performed. In other words, the processor 140 may execute at least one instruction or program stored in the internal memory provided in the processor 140 or the memory 130 to perform certain operations.

The electronic device 100 may be any type of device that performs functions by including a processor and a memory. The electronic device 100 may be a fixed or portable device. Examples of the electronic device 100 may include various electronic devices, such as computers such as a desktop, a laptop, and a tablet, TVs, set-top boxes, smartphones, cellular phones, game players, music players, video players, medical equipment, home appliances, etc. The electronic device 100 may also be referred to as a display device, a computing device, or a media device.

According to an embodiment of the disclosure, by executing one or more instructions stored in the memory 130, the processor 140 may control content to be displayed, recognize a program for the displayed content, request, by using a program ID of the recognized program for the content, a server for information about a chat room corresponding to the program ID, and when obtaining the information about the chat room from the server in response to the request, output, while displaying the content, a user interface for inquiring whether to execute the chat room based on the obtained information about the chat room.

According to an embodiment of the disclosure, by executing the one or more instructions stored in the memory 130, the processor 140 may receive, in response to the user interface for inquiring whether to execute the chat room, a user input for requesting execution of the chat room, transmit, to the server, a request to join the chat room according to the user input, and receive, from the server, a join response indicating joining of the chat room .

According to an embodiment of the disclosure, by executing the one or more instructions stored in the memory 130, the processor 140 may establish, by referring to an endpoint included in the join response, a communication connection to a chat room server that provides a chat room service.

According to an embodiment of the disclosure, by executing the one or more instructions stored in the memory 130, when failing to obtain the information about the chat room from the server in response to the request, the processor 140 may transmit, to the server, a request for creation of a chat room corresponding to the program ID and obtain, in response to the request, information about the created chat room from the server.

According to an embodiment of the disclosure, by executing the one or more instructions stored in the memory 130, the processor 140 may display a chat room list including one or more chat rooms, and according to a user input for selecting a chat room from the displayed chat room list, control entry to the selected chat room and change a current channel to a content channel corresponding to the selected chat room, and display the selected chat room while displaying content provided on the changed content channel.

According to an embodiment of the disclosure, by executing the one or more instructions stored in the memory 130, the processor 140 may transmit, when receiving a request to share the chat room corresponding to the program ID from the user, the request to share the chat room to the server, receive, from the server, chat room access information for accessing the chat room corresponding to the program ID, and transmit the received chat room access information to a mobile device that is to share the chat room.

According to an embodiment of the disclosure, by executing the one or more instructions stored in the memory 130, the processor 140 may generate a quick response (QR) code based on a URL included in the chat room access information and display the generated QR code to be captured by the mobile device, wherein the QR code is captured by the mobile device and then used by the mobile device to transmit a join request to the chat room server.

According to an embodiment of the disclosure, by executing the one or more instructions stored in the memory 130, the processor 140 may provide an icon that enables sharing of the chat room with another user, receive, from the server, chat room sharing information according to a user input for selecting the icon, and transmit the received chat room sharing information to an electronic device of the other user.

According to an embodiment of the disclosure, by executing the one or more instructions stored in the memory 130, the processor 140 may recognize a program for the content by using at least one of automatic content recognition (ACR), context awareness, or program recognition using information included in metadata.

According to an embodiment of the disclosure, the chat room sharing information may include a URL generated based on the chat room information, and the URL may be transmitted to the electronic device of the other user via the mobile device of the user and a mobile device of the other user.

FIG. 9 is a detailed block diagram of an electronic device according to an embodiment of the disclosure.

Referring to FIG. 9, the electronic device 100 may include a communicator 110, a display 120, a memory 130, a processor 140, a video processor 150, an audio processor 160, an audio output interface 165, a user input interface 170, an input/output (I/O) interface 180, and a detector 190.

The communicator 110 may perform communication between the electronic device 100 and the service server 200. The communicator 110 may include one or more modules that enable wireless communication between the electronic device 100 and a wireless communication system or between the electronic device 100 and a network on which another electronic device is located. For example, the communicator 110 may include a broadcast receiving module 111, a mobile communication module 112, a wireless Internet module 113, and a short-range communication module 114. The communicator 110 may be referred to as a transmitter/receiver.

The broadcast receiving module 111 receives broadcast signals and/or broadcast-related information from an external broadcast management server via a broadcast channel. The broadcast signals may include a TV broadcast signal, a radio broadcast signal, and a data broadcast signal, as well as a broadcast signal in which the data broadcast signal is combined with the TV broadcast signal or radio broadcast signal.

The mobile communication module 112 transmits or receives wireless signals to or from at least one of a base station, an external terminal, or a server on a mobile communication network. The wireless signals may include a voice call signal, a video call signal, or data in any one of various formats for transmission and reception of a text/multimedia message.

The wireless Internet module 113 refers to a module for wireless Internet access, and may be built into or externally connected to a device. As wireless Internet technologies, wireless local area network (WLAN) (WiFi), wireless broadband (Wibro), World Interoperability for Microwave Access (Wimax), high speed downlink packet access (HSDPA), etc. may be used. The electronic device 100 may establish a Wi-Fi peer-to-peer (P2P) connection with another device via the wireless Internet module 113.

The short-range communication module 114 refers to a module for short-range communication. As short-range communication technologies, Bluetooth, radio frequency identification (RFID), Infrared Data Association (IrDA), ultra-wideband (UWB), ZigBee, etc. may be used.

The display 120 may display an image on a screen according to control by the processor 140. The image displayed on the screen may be received from the communicator 110, the I/O interface 180, and the memory 130.

The video processor 150 may process image data to be displayed by the display 120 and perform various image processing operations, such as decoding, rendering, scaling, noise removal, frame rate conversion, and resolution conversion, on the image data.

According to an embodiment of the disclosure, while content selected by the user is displayed, the video processor 150 may process a chat room corresponding to the displayed content to be output in a multi-window or picture-in-picture (PIP) mode.

The audio processor 160 processes audio data. The audio processor 160 may perform various processing operations, such as decoding, amplification, noise removal, etc., on the audio data.

The audio output interface 165 may output, according to control by the processor 140, audio in a broadcast signal received according to control by the controller 480, audio input via the communicator 110 or the I/O interface 180, or audio stored in the memory 130. The audio output interface 165 may include at least one of a speaker, a headphone output terminal, or a Sony/Phillips Digital Interface (S/PDIF) output terminal.

The user input interface 170 refers to a device via which the user inputs data for controlling the electronic device 100. Examples of the user input interface 170 may include, but are not limited to, a keypad, a dome switch, a touch pad, a jog wheel, and a jog switch.

The I/O interface 180 receives, according to control by the controller 480, video (e.g., a moving image and the like), audio (e.g., voice, music, etc.), and additional information (e.g., an electronic program guide (EPG) and the like) from outside of the electronic device 100. The I/O interface 180 may include one of an High-Definition Multimedia Interface (HDMI) port 181, a component jack 182, a PC port 183, and a universal serial bus (USB) port 184. The I/O interface180 may include a combination of the HDMI port 181, the component jack 182, the PC port 183, and the USB port 184.

In an embodiment of the disclosure, the HDMI port 181 may receive broadcast content from a set-top box or a content providing device according to control by the processor 140.

The detector 190 detects a user's voice, images, or interactions and may include a microphone 191, a camera 192, and a light receiver 193.

The microphone 191 receives a voice uttered by the user. The microphone 191 may convert the received voice into an electrical signal and output the electrical signal to the processor 140.

The camera 192 receives an image (e.g., consecutive frames) corresponding to a user's motion including his or her gesture performed within a recognition range of the camera 192.

The light receiver 193 receives an optical signal (including a control signal) received from a remote control device. The light receiver 193 may receive, from the remote control device, an optical signal corresponding to a user input (e.g., touching, pressing, touch gesture, voice, or motion). A control signal may be extracted from the received optical signal according to control by the processor 140.

According to an embodiment of the disclosure, the memory 130 may store programs necessary for processing or control by the processor 140, and store data input to or output from the electronic device 100. Furthermore, the memory 130 may store pieces of data necessary for operations of the electronic device 100. Also, programs stored in the memory 130 may be categorized into a plurality of modules according to their functions.

The memory 130 may include at least one type of storage medium, i.e., at least one of a flash memory-type memory, a hard disk-type memory, a multimedia card micro-type memory, a card-type memory (e.g., an SD card or an XD memory), RAM, SRAM, ROM, EEPROM, PROM, a magnetic memory, a magnetic disc, or an optical disc.

The processor 140 controls all operations of the electronic device 100. For example, the processor 140 may perform functions of the electronic device 100 described in the disclosure by executing one or more instructions stored in the memory 130.

The processor 140 performs functions of controlling all the operations of the electronic device 100 and a flow of signals between the internal components of the electronic device 100 and processing data. When there is an input by the user or preset and stored conditions are satisfied, the processor 140 may execute an operating system (OS) and various applications stored in the memory 130.

In addition, the processor 140 may include an internal memory. In this case, at least one of data, programs, or instructions stored in the memory 130 may be stored in the internal memory of the processor 140.

In addition, the block diagram of the electronic device 100 is provided for illustration of an embodiment of the disclosure. Each of the components in the block diagram may be integrated, added, or omitted according to the specification of the electronic device 100 that is actually implemented. For example, two or more components may be combined into a single component, or a single component may be split into two or more components when necessary. Functions performed in each block are intended to describe embodiments of the disclosure, and a specific operation or device related to the functions does not limit the scope of the disclosure.

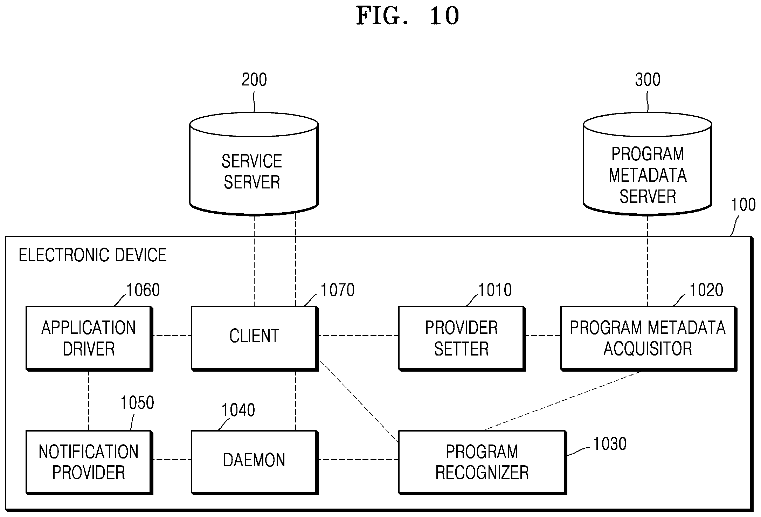

According to an embodiment of the disclosure, the electronic device 100 may recognize a program for displayed content and perform an operation for enabling entry to a chat room created in correspondence to the recognized program. Hereinafter, a method, performed by an electronic device, of inducing a user to enter a chat room by recognizing a program for displayed content is described with reference to FIGS. 10 to 15.

FIG. 10 is a functional block diagram of an electronic device that performs operations of recognizing a program for displayed content and inducing entry to a chat room corresponding to the program, according to an embodiment of the disclosure.

Referring to FIG. 10, the electronic device 100 may include a provider setter 1010, a program metadata acquisitor 1020, a program recognizer 1030, a daemon 1040, a notification provider 1050, an application driver 1060, and a client 1070.

The provider setter 1010 may set a content provider from which the electronic device 100 receives content. Various content providers may exist according to a region in which the electronic device 100 is installed and a communication network over which the electronic device 100 is provided with content. The provider setter 1010 may select and set a content provider from among a plurality of content providers. The content provider may be identified based on a content provider ID.

The program metadata acquisitor 1020 may obtain, based on a provider ID set by the provider setter 1010, program metadata corresponding to the provider ID, e.g., broadcast schedule information, from the program metadata server 300.

The program recognizer 1030 may obtain program information by recognizing content currently being displayed by the electronic device 100. The program recognizer 1030 may recognize a program using, for example, context-aware technology, ACR technology, or information included in content metadata. The context-aware technology provides a function of specifying which program on a channel a user is currently viewing by recognizing program metadata information provided by the program metadata acquisitor 1020 and a screen currently being output on a display. ACR works independently of context-aware technology to provide a function of specifying a program the user is currently viewing.

The daemon 1040 is a process resident on a system, and when a program currently being viewed by the user on the electronic device 100 is specified by the program recognizer 1030 after receiving a chat room list generated based on a currently set provider ID from the service server 200, the daemon 1040 may check the chat room list for a chat room created in correspondence to information about the program currently being viewed, and notify the notification provider 1050 that the client 1070 is to be executed.

The notification provider 1050 may display, on a screen, the presence of the chat room created in correspondence to the information about the program currently being viewed, and when the user selects the chat room, the client 1070 may be started via the application driver 1060.

The client 1070 may transmit a request to join the chat room to the service server 200 in order to display the chat room in the program currently being viewed.

The client 1070 may be executed via a separate application entry point according to the user's selection, and when an application is executed, may request the service server 200 for a chat room list generated based on a content provider having a provider ID currently set in the electronic device 100, receive the chat room list from the service server 200, and display the chat room list on the screen in various ways. Accordingly, the user may select a chat room from the displayed chat room list, and move to a channel providing the selected program and directly enter the chat room linked to the program. After joining the linked chat room, the user may use an opinion sharing service via the chat room associated with the program while watching the program.

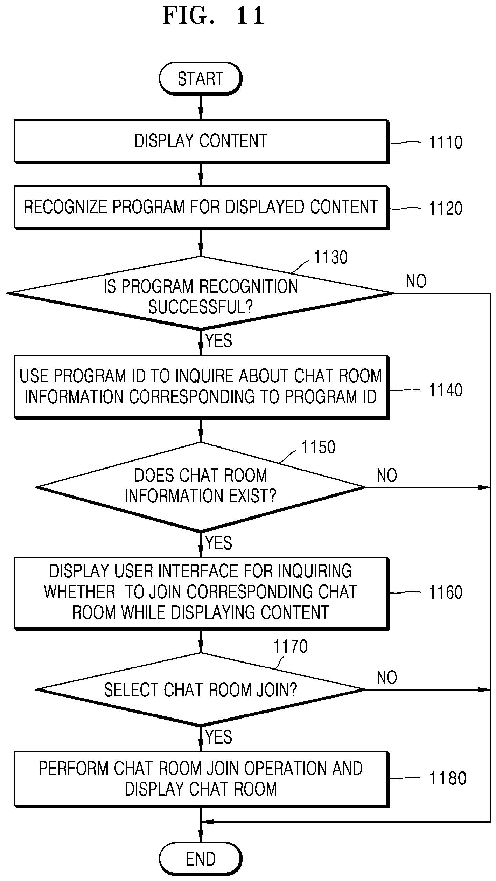

FIG. 11 is a flowchart illustrating an example of a process for a method, performed by an electronic device, of inducing entry to a chat room by recognizing displayed content, according to an embodiment of the disclosure.

Referring to FIG. 11 , in operation 1110 , the electronic device 100 may display live content.

In operation 1120, the electronic device 100 may recognize a program for content currently being displayed on the electronic device 100. In detail, the electronic device 100 may perform a program recognition operation on content displayed on the screen by using context-aware technology, ACR, etc.

In operation 1130, when the program recognition is successful as a result of performing the program recognition operation, the electronic device 100 may perform operation 1140, and when the program recognition is not successful, i.e., when the program recognition fails, the electronic device 100 may then end the process. When the program recognition is successful, it is understood as successful extraction of a program ID as a result of performing the program recognition operation, and when the program recognition fails, it is understood as a failure in obtaining the program ID.

In operation 1140, the electronic device 100 may use a corresponding program ID to inquire of the server as to whether there is chat room information corresponding to the program ID.

According to an embodiment of the disclosure, by transmitting a program ID to the service server 200 each time a program ID is obtained by performing a program recognition operation, the electronic device 100 may inquire whether there is chat room information corresponding to the program ID.

According to an embodiment of the disclosure, the electronic device 100 may also download a chat room list from the service server 200 based on a provider ID set in the electronic device 100, and then check whether chat room information corresponding to the program ID exists in the chat room list.

In operation 1150, the electronic device 100 may determine whether the chat room information corresponding to the program ID of the currently displayed content is obtained, and end the process when the chat room information is not obtained. That is, when the electronic device 100 is able to recognize the program for the content currently being displayed thereon but a chat room created in correspondence to the recognized program does not exist, the electronic device 100 may then end the process. When the chat room information corresponding to the program ID for the currently displayed content is obtained, the electronic device 100 may perform operation 1160.

In operation 1160, while displaying the content, the electronic device 100 may automatically display a user interface for inquiring whether to join a chat room created in correspondence to the content.

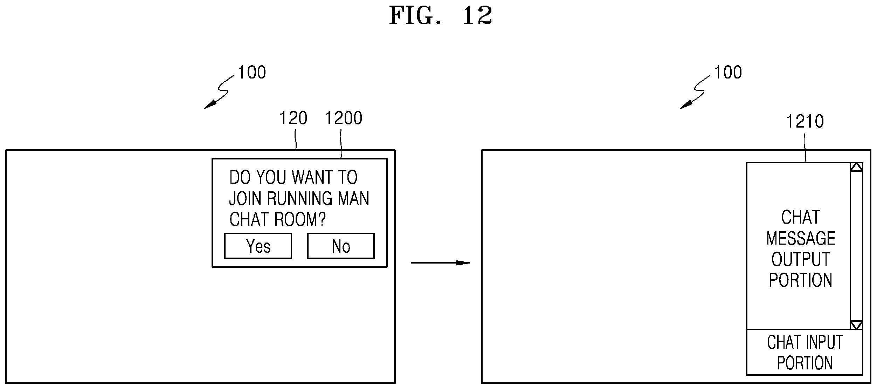

In detail, while displaying the content, the electronic device may output a user interface for indicating that a chat room created in correspondence to the displayed content exists, and inquiring whether to join the chat room. An example of such a user interface is shown in FIG. 12.

FIG. 12 illustrates an example of a user interface for inquiring whether to join a chat room created in correspondence to content that is automatically recognized while being displayed by an electronic device, according to an embodiment of the disclosure.

Referring to FIG. 12, while displaying content <Running Man> on a screen of the display 120, the electronic device 100 may recognize that a program called <Running Man> is displayed by automatically recognizing the content displayed on the screen, and when a chat room corresponding to the program <Running Man> exists, the electronic device 100 may output an user interface 1200 on the screen of the display 120.

The user interface 1200 may include buttons for selecting YES and NO together with a message <Do you want to join Running Man chat room?>. When receiving a user input for selecting NO from the user, the electronic device 100 may perform processing that will make the user interface 1200 disappear without any further operation. When receiving a user input for selecting YES from the user, the electronic device 100 may perform a chat room join operation by transmitting, to the service server 200, a request to join a user account of the electronic device 100 to the Running Man chat room. The chat room join operation is as described with reference to FIG. 6.

Returning back to FIG. 11, in operation 1170, the electronic device 100 may determine whether there is a user input for selecting chat room join, and when there is no user input for selecting chat room join, the electronic device 100 may end the process.

When there is a user input for selecting chat room join, in operation 1180, the electronic device 100 may perform a chat room join operation and display a joined chat room.

In detail, when there is a user input for selecting chat room join, the electronic device 100 may transmit a chat room join request to the service server 200, based on the user account and the program ID, and upon completion of the chat room join, receive chat room access information for accessing the chat room from the service server 200. The electronic device 100 may join the chat room by establishing a communication connection to the chat room server 400 using the chat room access information. The chat room join process is as described with reference to FIG. 6. After joining the chat room, the electronic device 100 may display the chat room corresponding to the content while displaying the content. Referring to FIG. 12, the electronic device 100 may display a chat room 1210 on a portion of a screen on which content is displayed. The chat room 1210 may include a chat input portion for inputting a chat message and a chat message output portion for outputting a chat message.

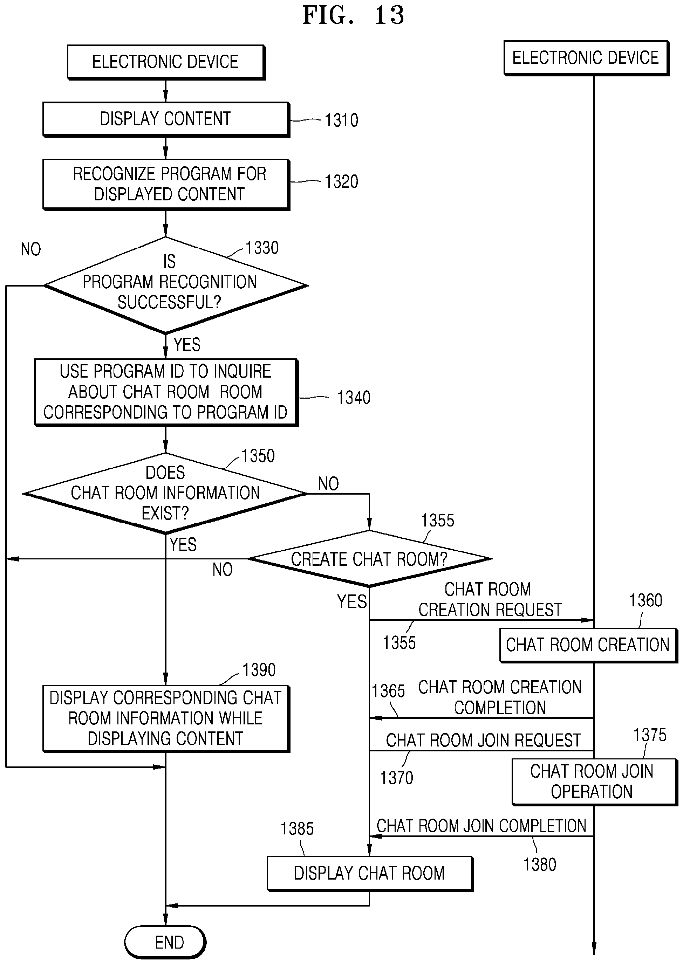

FIG. 13 is a flowchart illustrating another example of a process of a method, performed by an electronic device, of inducing entry to a chat room by recognizing displayed content, according to an embodiment of the disclosure.

Referring to FIG. 13, because operations 1310 to 1340 are substantially the same as operations 1110 to 1140 illustrated in FIG. 11, detailed descriptions thereof are omitted herein.

In operation 1350, when there is a chat room corresponding to the program ID of the currently displayed content, the electronic device 100 may perform operation 1390.

In operation 1390, the electronic device 100 may display corresponding chat room information while displaying the content. In detail, the electronic device 100 may output a user interface for inquiring whether to enter a chat room corresponding to the displayed content.

When it is determined in operation 1350 that there is no chat room corresponding to the program ID of the currently displayed content, the electronic device 100 may perform operation 1355.

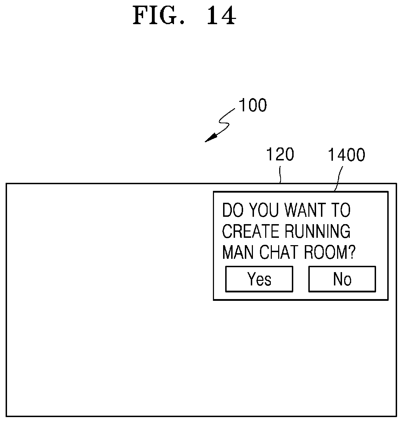

In operation 1355, the electronic device 100 may output a user interface for inquiring whether to create a chat room corresponding to the currently displayed content. An example of such a user interface is shown in FIG. 14.

FIG. 14 illustrates an example of a user interface for inquiring whether to create a chat room corresponding to content that is automatically recognized while being displayed by an electronic device, according to an embodiment of the disclosure.

Referring to FIG. 14, while displaying content <Running Man> on the screen of the display 120, the electronic device 100 may recognize that a program called <Running Man> is displayed by automatically recognizing the content displayed on the screen, and output an user interface 1400 for inquiring whether to create a chat room corresponding to the program <Running Man>.

The user interface 1400 may include buttons for selecting YES and NO together with a message <Do you want to create Running Man chat room?>. When receiving a user input for selecting NO from the user, the electronic device 100 may perform processing that will make the user interface 1400 disappear without any further operation. When receiving a user input for selecting YES from the user, the electronic device 100 may transmit a request for creation of the Running Man chat room to the service server 200.

Returning back to FIG. 13, when receiving a user input for requesting creation of a chat room from the user in response to the inquiry about chat room creation, in operation 1355, the electronic device 100 may transmit a chat room creation request to the service server 200 based on the program ID corresponding to the currently displayed content.

In operation 1360, the service server 200 may perform a chat room creation operation based on the program ID received from the electronic device 100. The chat room creation operation is as described with reference to FIG. 4.

In operation 1365, the service server 200 may transmit a chat room creation completion response to the electronic device 100.

In operation 1370, the electronic device 100 may transmit a chat room join request to the service server 200.

In operation 1375, the service server 200 may perform a chat room join operation. The chat room join operation is as described with reference to FIG. 6.

In operation 1380, the service server 200 may transmit a chat room join completion response to the electronic device 100.

In operation 1385, the electronic device 100 may display the joined chat room.

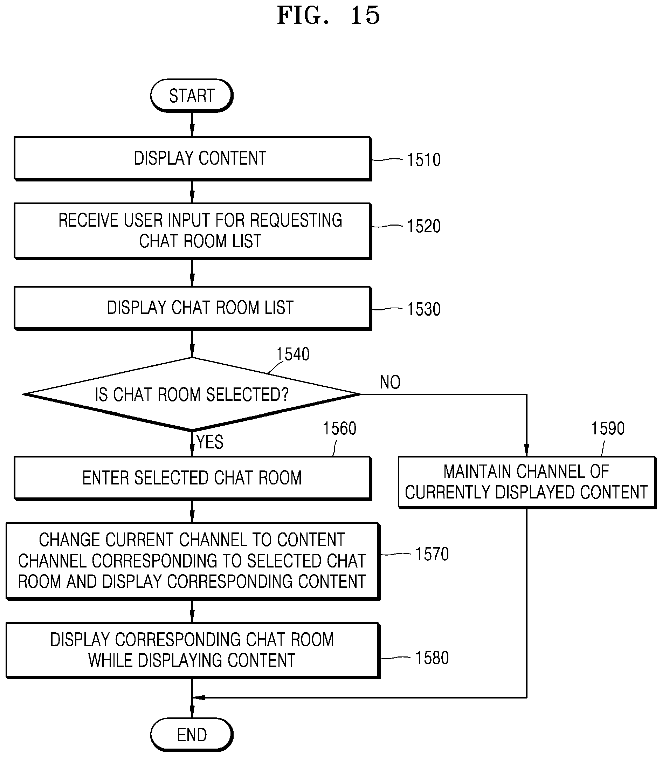

The above-described examples are examples in which the electronic device 100 enters a chat room corresponding to currently displayed content. The electronic device 100 may provide a chat room list, and as one chat room is selected from the chat room list, may control a current channel to be changed to a program channel related to the selected chat room and corresponding content to be displayed. Methods of selecting a chat room according to a chat room list are described with reference to FIGS. 15 to 18.

FIG. 15 is a flowchart illustrating an example of a method, performed by an electronic device, of displaying a chat room list, selecting a chat room from the displayed chat room list, and inducing entry to the chat room, according to an embodiment of the disclosure.

Referring to FIG. 15, in operation 1510, the electronic device 100 may display content.

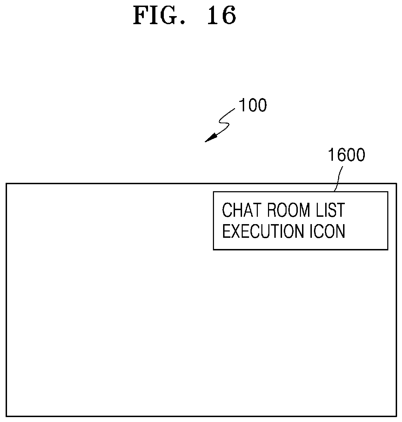

In operation 1520, the electronic device 100 may receive a user input for requesting a chat room list. The electronic device 100 may receive a user input for requesting a chat room list via various user interfaces. For example, the electronic device 100 may receive a user input for requesting a chat room list by performing speech recognition on the content of a user's utterance received via a microphone, for example, the content of an utterance <Show a chat room list!> For example, the electronic device 100 may receive a user input for requesting a chat room list according to an input via a specific button provided in a remote controller for remotely controlling the electronic device 100. For example, as shown in FIG. 16, the electronic device 100 may receive a user input for requesting a chat room list according to a user input for selecting a chat room list execution icon 1600 displayed on a portion of the display screen of the electronic device 100.

In operation 1530, the electronic device 100 may display a chat room list in response to the user input for requesting a chat room list. In detail, the electronic device 100 may display a chat room list including one or more chat rooms created in association with contents that are made available by a content provider currently set to provide content to the electronic device 100. Even for the contents made available by a content provider currently set in the electronic device 100, a chat room may be created for some content, and a chat room may not be created for other content. In addition, because a chat room is for sharing opinions related to content currently being broadcast while viewing the content, the chat room may represent a chat room corresponding to contents currently being broadcast.

According to an embodiment of the disclosure, when receiving a request for a chat room list, the electronic device 100 may obtain the chat room list by requesting the service server 200 for the chat room list based on a content provider set in the electronic device 100 and receiving the chat room list from the service server 200.

According to an embodiment of the disclosure, the electronic device 100 may request, at regular intervals, the service server 200 for a chat room list based on a content provider set in the electronic device 100 and receive and store the chat room list, and upon a user's request, display the chat room list.

The electronic device 100 may display the chat room list in various forms.

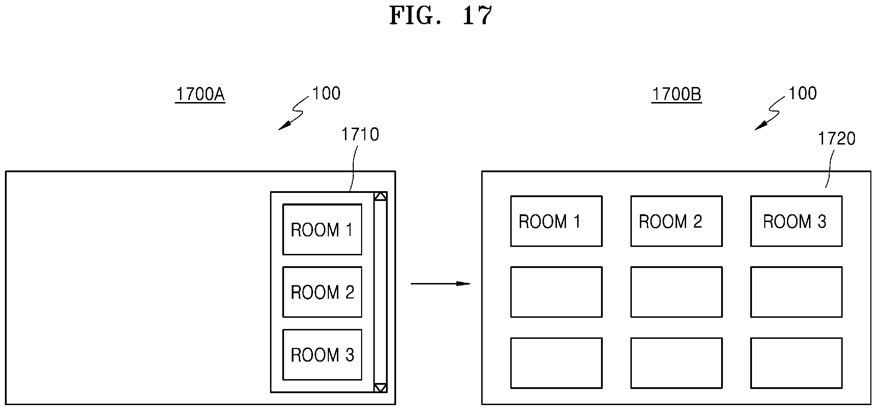

FIG. 17 illustrates examples of a chat room list displayed by an electronic device, according to an embodiment of the disclosure.

Referring to 1700A of FIG. 17, the electronic device 100 may display a chat room list 1710 on a portion of the display screen in order to minimize interference with the display of content currently being viewed by the user. The chat room list 1710 may include one or more chat rooms. The one or more chat rooms included in the chat room list 1710 may represent chat rooms created in correspondence to contents currently being broadcast on one or more channels provided by a content provider set in the electronic device 100.

Referring to 1700B of FIG. 17, the electronic device 100 may display a chat room list 1720 on the entire display screen. The chat room list 1720 may include one or more chat rooms. The one or more chat rooms included in the chat room list 1720 may represent chat rooms created in correspondence to contents currently being broadcast on one or more channels provided by a content provider set in the electronic device 100.

In each of the chat rooms included in the chat room list 1710 or 1720 illustrated in 1700A or 1700B of FIG. 17, program information corresponding to each chat room may be displayed. The user may select a desired chat room by checking program information corresponding to each chat room.

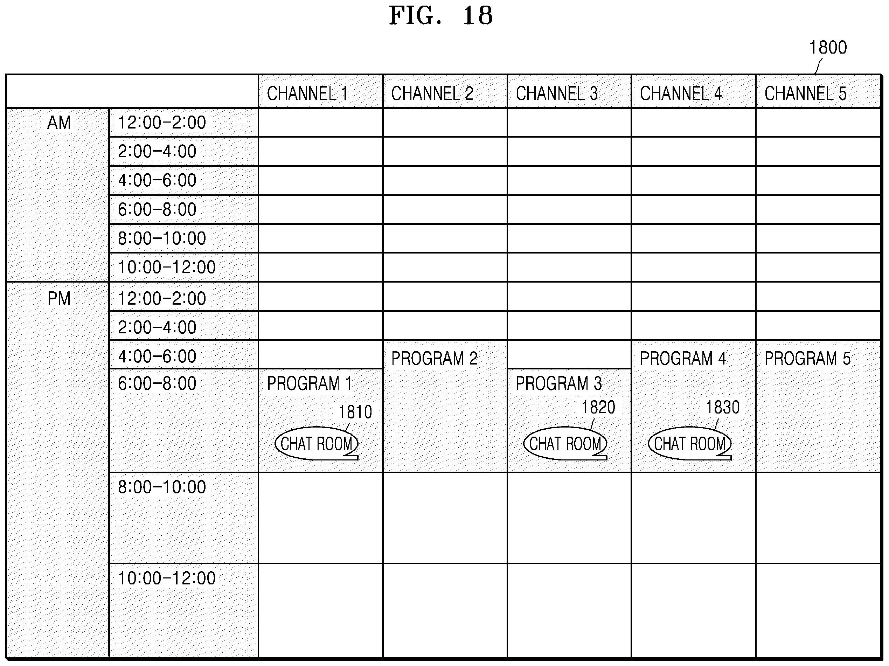

FIG. 18 illustrates another example of a chat room list displayed by an electronic device, according to an embodiment of the disclosure.

Although FIG. 17 shows the examples in which the electronic device 100 separately generates a user interface for displaying a chat room list, in the example of FIG. 18, the electronic device 100 may create a chat room list using a program schedule 1800 provided thereby, e.g., by adding a display of chat rooms onto the program schedule 1800.

Referring to FIG. 18, the program schedule 1800 may include program timetables corresponding to channels 1 to 5, and, for example, when a time for which the user requests a chat room list is 7:00 pm, the electronic device 100 may display, on the program schedule 1800, a chat room corresponding to content for which the chat room has been created among contents currently being broadcast. On the program schedule 1800, chat room icons 1810, 1820, and 1830 are respectively displayed in program 1 of channel 1, program 3 of channel 3, and program 4 of channel 4 to display chat rooms associated therewith. The user may select one of the chat room icons 1810, 1820, and 1830 respectively associated with program 1, program 3, and program 4 on the program schedule 1800.

Returning back to FIG. 15, in operation 1540, the electronic device 100 may determine whether there is a user input for selecting a chat room.

When it is determined that there is no user input for selecting a chat room from the chat room list, the electronic device 100 may perform operation 1590. A user input for selecting a chat room from the chat room list may be received in various forms. For example, a chat room may be selected from a chat room list as shown in 1700A or 1700B according to a user input for selecting a desired chat room via a remote controller. For example, on the program schedule 1800 of FIG. 18, a chat room may be selected according to a user input for selecting one of the chat room icons 1810, 1820, and 1830.

In operation 1590, the electronic device 100 may continuously display the current content while maintaining a currently displayed content channel.

When it is determined that there is a user input for selecting a chat room from the chat room list, the electronic device 100 may perform operation 1560.

In operation 1560, the electronic device 100 may perform an operation of entering the chat room selected by the user. The operation of entering the chat room may represent an operation of joining the user to the chat room selected by the user. The electronic device 100 may request chat room join from the service server 200, based on a user account and a program ID corresponding to the chat room selected by the user, and according to a chat room join operation of the service server 200, may receive chat room access information for accessing the chat room from the service server 200. Then, the electronic device 100 may establish a communication connection to the chat room server 400 by using the chat room access information to thereby prepare to receive chat room conversation content from the chat room server 400. Because the chat room join operation is the same as that described with reference to FIG. 6, a further description thereof will be omitted herein.

In operation 1570, the electronic device 100 may change a current channel to a content channel corresponding to the selected chat room and display content provided on the corresponding channel. When the chat room selected by the user corresponds to the content currently being displayed by the electronic device 100, the electronic device 100 does not need to separately change a current channel. However, when the chat room selected by the user does not correspond to the content currently being displayed by the electronic device 100, the electronic device 100 needs to change the current channel to a channel providing content corresponding to the chat room selected by the user. For example, when the electronic device 100 receives a selection of the chat room icon 1810 corresponding to program 1 of channel 1 while currently displaying program 2 of channel 2, and receives a selection of the chat room icon, the electronic device 100 needs not only to enter the chat room corresponding to program 1 but also to display program 1. Accordingly, the electronic device 100 may change a source from channel 2 that is the current channel to channel 1, and display, on a display, program 1 provided by channel 1 that is the changed source.

In operation 1580, the electronic device 100 may display the corresponding chat room while displaying content on the changed channel. For example, as in the above example, the electronic device 100 may display program 1 on the display by changing the current channel to channel 1 and display a chat room corresponding to program 1.

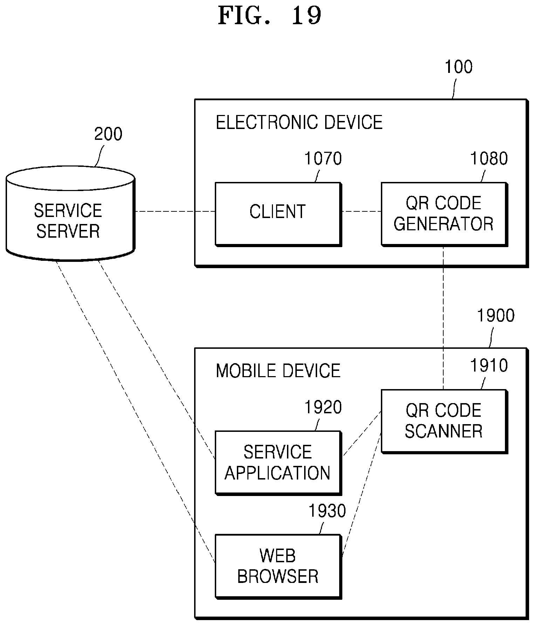

When the electronic device 100 has a form of a TV, it may be inconvenient for users to input a message via the TV. Therefore, according to an embodiment of the disclosure, the electronic device 100 may share information about a chat room with another electronic device in order to use the other electronic device that enables convenient text entry when inputting a chat message to the chat room. Hereinafter, operations performed by the electronic device 100 to share chat room information with another electronic device, e.g., a mobile device, are described with reference to FIGS. 19 to 21.

FIG. 19 is a functional block diagram of an electronic device and a mobile device for sharing chat room information, according to an embodiment of the disclosure.

Referring to FIG. 19, the electronic device 100 may obtain chat room sharing information from the service server 200 and transmit the chat room sharing information to the mobile device 1900. The chat room sharing information may be transmitted to the mobile device 1900 by using various methods, but a method using a QR code is now described.

The electronic device 100 may include a client 1070 and a QR code generator 1080.

The client 1070 may transmit a chat room sharing request to the service server 200 according to a user's request. For example, the electronic device 100 may provide a menu such as <Share a Chat Room>, and when receiving a user input for selecting the menu such as <Share a Chat Room>, the electronic device 100 may determine that a chat room sharing request is received. In response to such a request, the client 1070 may receive, from the service server 200, chat room sharing information for participating in a chat room. The chat room sharing information may include, for example, URL information generated based on a chat room ID, a chat room name, a token, etc. A token is used only once, and represents information that expires after a certain period of time and becomes unusable.

The QR code generator 1080 may generate a QR code based on the URL information obtained by the client 1070.

The client 1070 may control the QR code generated by the QR code generator 1080 to be displayed on the display screen.

The mobile device 1900 may include a QR code scanner 1910, a service application 1920, and a web browser 1930.

The QR code scanner 1910 may capture a QR code displayed on the display screen of the electronic device 100.

The service application 1920 or the web browser 1930 may obtain chat room sharing information from the captured QR code, and inquire whether the user desires to access a chat room by displaying, on a screen of the mobile device 1900, a chat room name, etc. as chat room information included in the chat room sharing information. Then, when the user selects the chat room name displayed on the screen, the service application 1920 or the web browser 1930 may determine that the user of the mobile application 1900 desires to access the chat room and perform an operation of accessing the chat room. That is, the service application 1920 or the web browser 1930 may perform a chat room join operation by requesting joining of the corresponding chat room from the service server 200. When the chat room join operation is completed, the user of the mobile device 1900 may enter a text message in the joined chat room via the mobile device 1900.

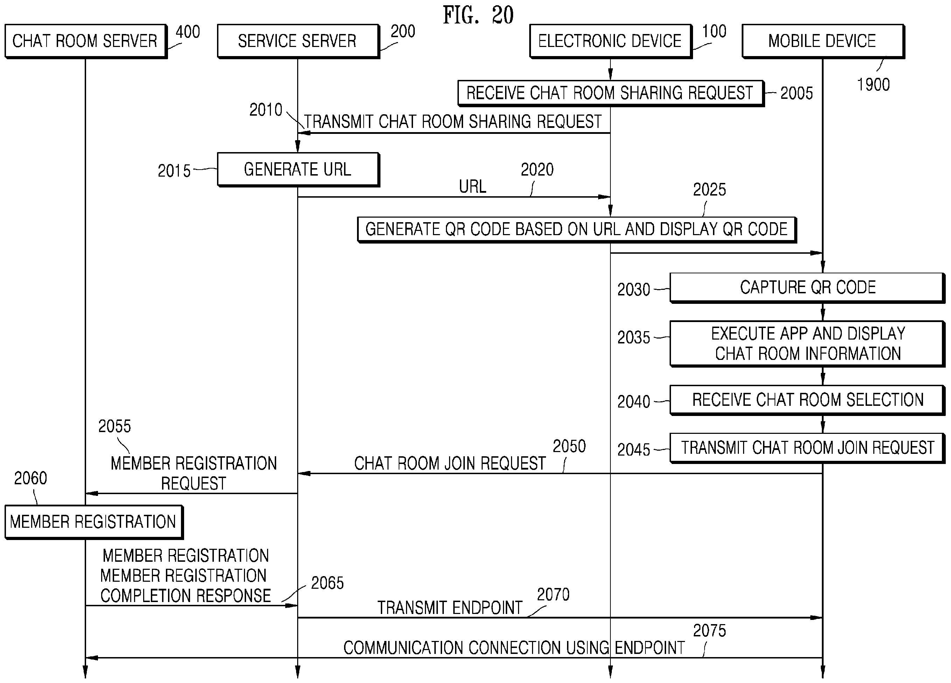

FIG. 20 is a flowchart illustrating an example of a process of operations of sharing a chat room, according to an embodiment of the disclosure.

In operation 2005, the electronic device 100 may receive a chat room sharing request from the user. For example, the electronic device 100 may provide an icon such as <Share a Chat Room>, and determine that a chat room sharing request is received by receiving a user input for selecting the icon such as <Share a Chat Room>.

In operation 2010, the electronic device 100 may transmit a chat room sharing request to the service server 200. The electronic device 100 may transmit, to the service server 200, a chat room sharing request based on a program ID corresponding to a chat room of which sharing is requested.

In operation 2015, when receiving the chat room sharing request from the electronic device 100, the service server 200 may inquire about a program ID in the chat room DB 250, the program ID corresponding to the chat room of which sharing is requested, to thereby check chat room information corresponding to the program ID. The service server 200 may generate URL information, based on a token indicating a single-use expiration time, a chat room ID and a chat room name in the chat room information corresponding to the corresponding program ID, etc.

In operation 2020, the service server 200 may transmit the URL information generated in this way to the electronic device 100.

In operation 2025, the electronic device 100 may generate a QR code based on the URL information received from the service server 200 and display the QR code on the display screen.

In operation 2030, the mobile device 1900 may obtain the QR code by capturing the QR code displayed on the display screen of the electronic device 100.

In operation 2035, the mobile device 1900 may execute an application to obtain chat room information from the QR code and display the obtained chat room information on the display screen. This chat room information may include, for example, a chat room name and the like, which allows the user to identify a program to which a chat room to be accessed corresponds.

In operation 2040, the mobile device 1900 may receive a user input for selecting the chat room information displayed on the display screen. For example, the mobile device 1900 may receive a user input for selecting a chat room name displayed on the display screen.

In operation 2045, the mobile device 1900 may transmit a chat room join request to the service server 200 by using a chat room ID, etc., that is chat room information included in the QR code, and in operation 2050, the service server 200 may receive the chat room join request from the mobile device 1900.

In operation 2055, according to the chat room join request from the mobile device 1900, the service server 200 may transmit, to the chat room server 400, a member registration request to register the mobile device 1900 as a member.

In operation 2060, the chat room server 400 may register the mobile device 1900 as a member in the chat room.

In operation 2065, the chat room server 400 may transmit a member registration completion response to the service server 200.

In operation 2070, after completion of the member registration, the service server 200 may transmit, to the mobile device 1900, an endpoint as information for accessing the corresponding chat room.

In operation 2075, the mobile device 1900 may complete joining of the chat room by performing a communication connection to the chat room server 400 using the endpoint received from the service server 200.

Through the chat room sharing operation, the user of the electronic device 100 and the mobile device 1900 may view content via the electronic device 100 while accessing a chat room corresponding to the content viewed via the electronic device 100 to input a chat room message to the chat room via the mobile device 1900.

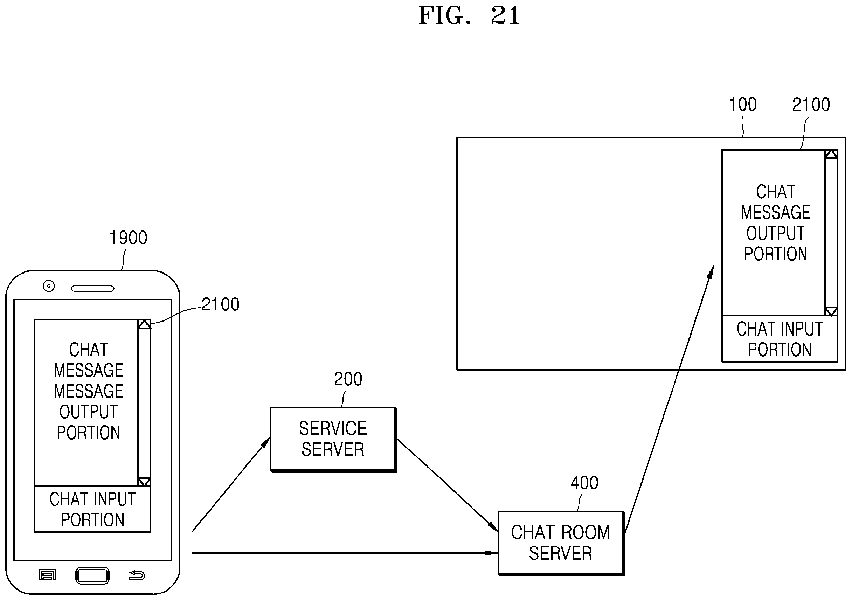

FIG. 21 is a reference diagram for describing an example of inputting a chat message to a chat room by using a mobile device by completing chat room sharing, according to an embodiment of the disclosure.

Referring to FIG. 21, the mobile device 1900 may also display a chat room 2100 on the display screen by obtaining sharing information regarding the chat room 2100 corresponding to content displayed on the electronic device 100 and completing a chat room sharing operation. In addition, the user may enter a chat message in a chat input portion of the chat room 2100 displayed on the display screen of the mobile device 1900. Contents of chat messages input to the mobile device 1900 in this way may be transmitted to the chat room server 400 through the service server 200 or directly to the chat room server 400. The chat room server 400 may transmit, to the electronic device 100 as well as the mobile device 1900, not only chat messages input by the user via the mobile device 1900 but also chat messages input by other users to the chat room 2100, so that the electronic device 100 and the mobile device 1900 may each output the chat messages exchanged among users in the chat room 2100 to a chat message output portion of the chat room 2100.

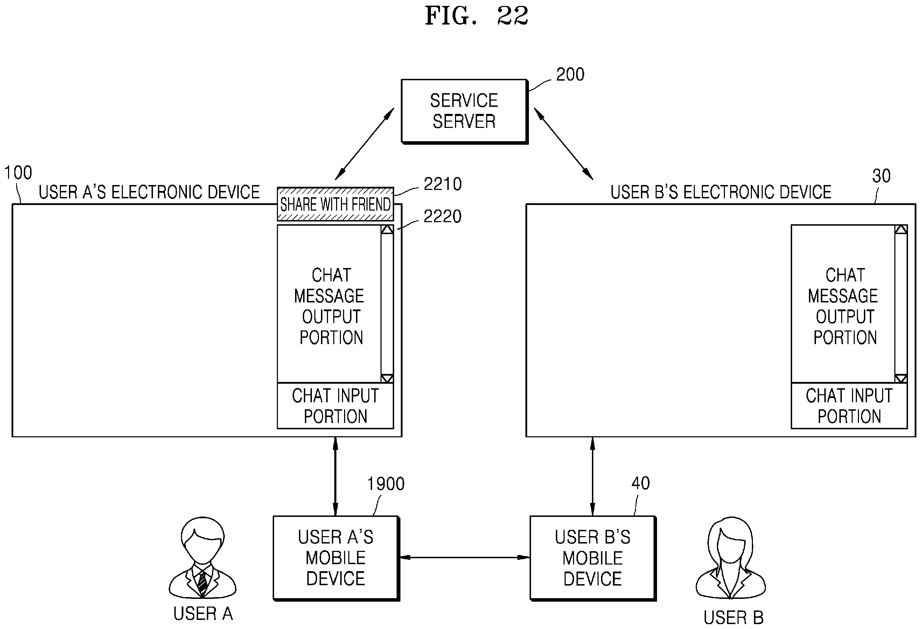

A chat room corresponding to content displayed on the electronic device 100 may be shared with the mobile device 1900 for convenience of inputting chat messages, as described above. In addition, the user of the electronic device 100 may share the content and the chat room with other users in order to enjoy chatting in the chat room while watching the content with the other users such as a user's friend. Hereinafter, operations performed by the electronic device 100 to share chat room information with another user's electronic device are described with reference to FIGS. 22 to 24.

FIG. 22 is a reference diagram for describing a method of sharing a chat room between users' electronic devices, according to an embodiment of the disclosure.

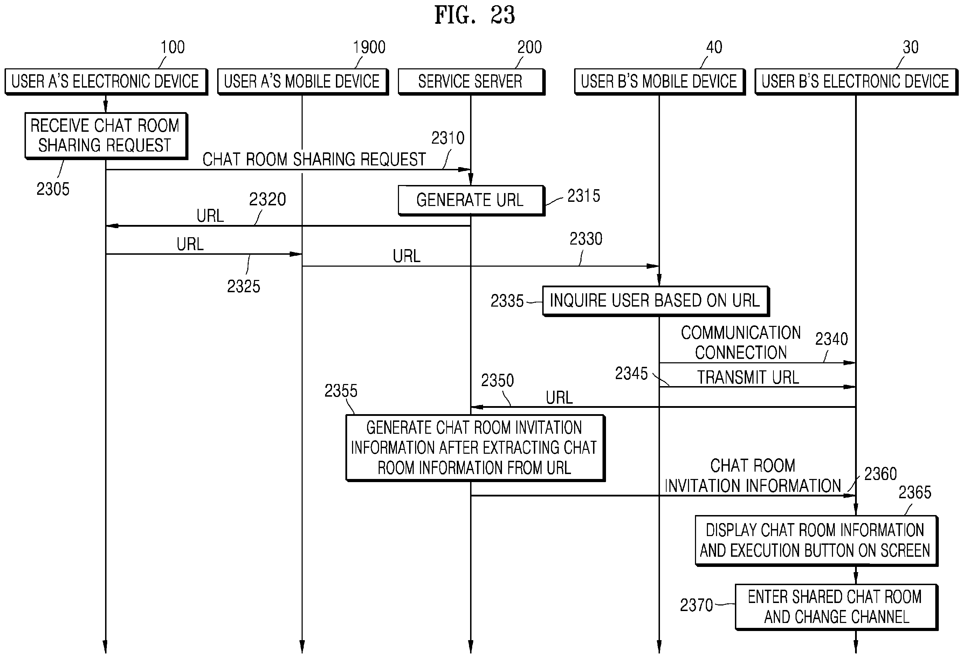

FIG. 23 is a flowchart illustrating an example of a process of sharing a chat room between users' electronic devices, according to an embodiment of the disclosure.

A method of sharing a chat room in order for user A who is using a chat room service while viewing certain content via the electronic device 100 to enjoy chatting while watching the content with user B who is his or her friend is described with reference to FIGS. 22 and 23.

Referring to FIG. 23, in operation 2305, a user A's electronic device 100 may receive a chat room sharing request from user A.

Referring to FIG. 22, according to the user A's request, while displaying specific content, a chat room 2220 corresponding to the content may be displayed. The chat room 2220 may provide a <Share with a Friend> icon 2210 that enables sharing of content corresponding to the chat room together with the chat room 2220. The user A's electronic device 100 may receive a user input for selecting the <Share with a Friend> icon 2210 from the user A.

In operation 2310, when receiving the chat room sharing request, the user A's electronic device 100 may request chat room sharing information from the service server 200.

In operation 2315, the service server 200 may generate a URL based on information about a chat room of which sharing is requested according to the chat room sharing request. For example, the service server 200 may generate a URL including information such as a chat room ID, a chat room name, a program ID, etc., based on chat room information regarding a chat room of which sharing is requested.

In operation 2320, the user A's electronic device 100 may receive, from the service server 200, the URL generated based on the chat room information.

In operation 2325, the user A's electronic device 100 may transmit the received URL to a user A's mobile device 1900. Various techniques may be used to implement a method of transmitting the URL from the user A's electronic device 100 to the user A's mobile device 1900. For example, the user A's electronic device 100 may generate and output a QR code as the URL, and the user A's mobile device 1900 may transmit the URL by capturing the QR code displayed on the user A's electronic device 100.

In operation 2330, the user A's mobile device 1900, which has received the URL containing the chat room information from the user A's electronic device 100, may transmit the URL to a user B's mobile device 40. The URL may be transmitted using various methods, for example, via an SNS system.

In operation 2335, the user B's mobile device 40 may extract chat room information from the URL received from the user A's mobile device 1900, and inquire of the user B as to whether he or she desires to access the chat room corresponding to the chat room information.

In operation 2340, when receiving a user input for selecting access to the chat room from the user B, the user B's mobile device 40 may search for a user B's electronic device 30 and establish a communication connection to the user B's electronic device 30.

In operation 2345, the user B's mobile device 40 may transmit the URL to the user B's electronic device 30.

In operation 2350, the user B's electronic device 30 may transmit, to the service server 200, the URL received from the user B's mobile device 40.

In operation 2355, the service server 200 may extract chat room information from the URL received from the user B's electronic device 30, and generate chat room invitation information based on the extracted chat room information.

In operation 2360, the service server 200 may transmit the generated chat room invitation information to the user B's electronic device 30.

In operation 2365, the user B's electronic device 30 may receive the chat room invitation information from the service server 200, and display the chat room invitation information and an execution button on the screen.

In operation 2370, when receiving, from the user B, a selection of the execution button for the chat room invitation information, the user B's electronic device 30 may enter the corresponding chat room and change a channel in order to display content corresponding to the chat room, thereby displaying the content as well as the chat room corresponding to the content.

By performing these operations, the user A's electronic device 100 may share the chat room information with the user B's electronic device 30, so that the user B's electronic device 30 may not only access the chat room of which sharing is requested but also display the content corresponding to the chat room. Accordingly, the user A and the user B may chat in the chat room while viewing the same content via their own electronic devices at their respective locations. Through this process, the user A and the user B may enjoy chatting with each other while viewing content together by performing simple and convenient manipulation using their mobile devices.

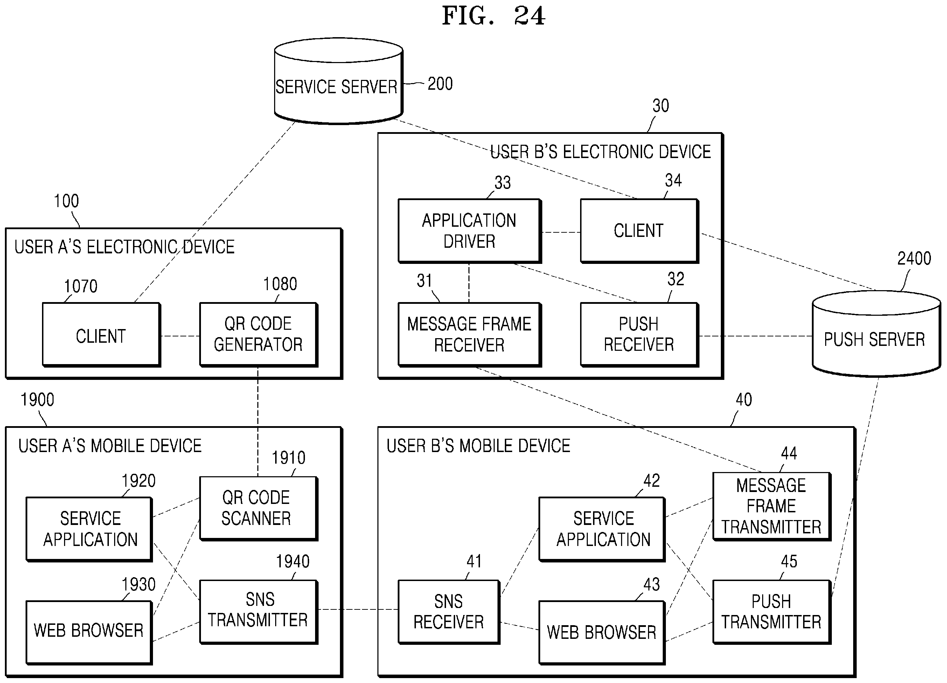

FIG. 24 is a functional block diagram of devices for performing a chat room sharing operation as illustrated in FIG. 22.

Referring to FIG. 24, the user A's electronic device 100 may obtain chat room sharing information from the service server 200 and transmit the chat room sharing information to the user A's mobile device 1900. The chat room sharing information may be transmitted to the user A's mobile device 1900 by using various methods, but a method using a QR code is now described.

The user A's electronic device 100 may include a client 1070 and a QR code generator 1080.

The client 1070 may transmit a chat room sharing request to the service server 200 according to a user A's request. For example, the user A's electronic device 100 may provide a menu such as <Share with a Friend>, e.g., the <Share with a Friend> icon 2210 as shown in FIG. 22, and when receiving a user input for selecting the menu such as <Share with a Friend>, the user A's electronic device 100 may determine that a chat room sharing request is received. In response to such a request, the client 1070 may receive, from the service server 200, chat room sharing information for participating in a chat room. The chat room sharing Information may include, for example, URL information generated based on a chat room ID, a chat room name, a program ID, a token, etc. A token is used only once, and represents information that expires after a certain period of time and becomes unusable.

The QR code generator 1080 may generate a QR code based on the URL information obtained by the client 1070.

The client 1070 may control the QR code generated by the QR code generator 1080 to be displayed on the display screen.

The user A's mobile device 1900 may include a QR code scanner 1910, a service application 1920, a web browser 1930, and an SNS transmitter 1940.

The QR code scanner 1910 may capture a QR code displayed on the display screen of the user "s electronic device 100.

The service application 1920 or the web browser 1930 may obtain URL information from the captured QR code, and inquire of the user A as to whether he or she desires to share chat room information with another user by displaying, on the screen of the user A's mobile device 1900, a chat room name, etc. as the chat room information included in the URL information. Then, when the user A selects the chat room name displayed on the screen, the service application 1920 may determine that the user A of the mobile application 1900 desires to share the chat room with the other user, and transmit, to the user B's mobile device 40, the URL information via the SNR transmitter 1940.

The user B's mobile device 40 may include an SNS receiver 41, a service application 42, a web browser 43, a message frame transmitter 44, and a push transmitter 45.

The SNS receiver 41 may receive the URL information from the user A's mobile device 1900 and transmit the URL information to the service application 42 or the web browser 43.

The service application 42 or the web browser 43 may obtain chat room sharing information from the received URL information, inquire whether the user B desires to enter a corresponding chat room by using the chat room name included in the chat room information, and when receiving, from the user B, a user input for requesting entry to the chat room, control the received URL information to be transmitted to the user B's electronic device.

When a message frame transmitter and a message frame receiver capable of transmitting and receiving messages between the user B's mobile device 40 and the user B's electronic device 30 are predefined, the message frame transmitter 44 may search for the user B's electronic device 30 located nearby and then transmit the URL information to the found user B's electronic device 30 in the form of a deeplink. In a case where there are no separate message frame transmitter and message frame receiver, the push transmitter 45 may transmit the URL information to the user B's electronic device 30 via a push server 2400.

When receiving the URL information via a message frame receiver 31 or a push receiver 32, the user B's electronic device 30 may execute a client 34 under the control of an application driver 33, and the client 34 may receive the received URL information.

The client 34 may obtain chat room information from the received URL information, participate in the chat room by requesting join to the chat room from the service server 200 by using a chat room ID included in the obtained chat room information, and change, by using a program ID, etc. included in the chat room information, a channel currently being displayed by the user B's electronic device 30 to a channel corresponding to the program ID to display content corresponding to the program ID.

Some embodiments of the disclosure may be implemented in the form of recording media including instructions executable by a computer, such as a program module executed by the computer. The computer-readable recording media may be any available media that are accessible by the computer, and include both volatile and non-volatile media and both removable and non-removable media. Furthermore, the computer-readable recording media may include computer storage media. The computer storage media include both volatile and non-volatile and both removable and non-removable media implemented in any method or technology for storage of information, such as computer-readable instructions, data structures, program modules, or other data.

Embodiments of the disclosure may be implemented as a software program including instructions stored in computer-readable storage media.

A computer may refer to a device configured to retrieve a stored instruction from a computer-readable storage medium and to operate in response to the retrieved instruction according to an embodiment of the disclosure, and may include an electronic device according to embodiments of the disclosure.

A computer-readable storage medium may be provided in the form of a non-transitory storage medium. In this regard, the term 'non-transitory' only means that the storage medium does not include a signal and is a tangible device, and the term does not differentiate between where data is semi-permanently stored in the storage medium and where the data is temporarily stored in the storage medium.

Furthermore, operation methods according to the embodiments of the disclosure may be included in the form of a computer program product when provided. The computer program product may be traded, as a product, between a seller and a buyer.

The computer program product may include a software program and a computer-readable storage medium having stored thereon the software program. For example, the computer program product may include a product (e.g., a downloadable application) in the form of a software program electronically distributed by a manufacturer of a device or through an electronic market. For such electronic distribution, at least a part of the software program may be stored on the storage medium or may be temporarily generated. In this case, the storage medium may be a storage medium of a server of the manufacturer, a server of the electronic market, or a relay server for temporarily storing the software program.

In a system consisting of a server and the device, the computer program product may include a storage medium of the server or a storage medium of the device. Alternatively, in a case where there is a third device (e.g., a smartphone) communicatively connected to the server or the device, the computer program product may include a storage medium of the third device. Alternatively, the computer program product may include a software program itself that is transmitted from the server to the device or the third device or that is transmitted from the third device to the device.

In this case, one of the server, the device, and the third device may execute the computer program product to perform methods according to embodiments of the disclosure. Alternatively, two or more of the server, the device, and the third device may execute the computer program product to perform the methods according to the embodiments of the disclosure in a distributed manner.

For example, the server (e.g., a cloud server or artificial intelligence (Al) server) may execute the computer program product stored therein to control the device communicatively connected to the server to perform the methods according to the embodiments of the disclosure.

In another example, the third device may execute the computer program product to control the device communicatively connected to the third device to perform the methods according to the embodiments of the disclosure. In a case where the third device executes the computer program product, the third device may download the computer program product from the server and execute the downloaded computer program product. Alternatively, the third device may execute the computer program product that is preloaded therein to perform the methods according to the embodiments of the disclosure.

Also, in this specification, the term "unit" may be a hardware component such as a processor or circuit, and/or a software component executed by a hardware component such as a processor.

The above description of the disclosure is provided for illustration, and it will be understood by one of ordinary skill in the art that changes in form and details may be readily made therein without departing from technical idea or essential features of the disclosure. Accordingly, the above-described embodiments of the disclosure and all aspects thereof are merely examples and are not limiting. For example, each component defined as an integrated component may be implemented in a distributed fashion, and likewise, components defined as separate components may be implemented in an integrated form.

The scope of the disclosure is defined not by the detailed description thereof but by the following claims, and all the changes or modifications within the meaning and scope of the appended claims and their equivalents should be construed as being included in the scope of the disclosure.

## Claims

1. An electronic device comprising:
a communication interface;
a memory storing one or more instructions; and
a processor configured to execute the one or more instructions stored in the memory to:
recognize a program associated with content to be displayed, request, through the communication interface, a server for information about a chat room corresponding to a program identity (ID) of the recognized program, and
output, based on the information about the chat room being obtained from the server in response to the request, a user interface to allow control as to whether to execute the chat room corresponding to the program ID of the recognized program while the content is being displayed.

2. The electronic device of claim 1, wherein the processor is further configured to execute the one or more instructions to:
receive, through the user interface, a user input requesting execution of the chat room,
transmit, to the server, a request to join the chat room according to the user input, and
receive, from the server, a join response indicating joining of the chat room.

3. The electronic device of claim 2, wherein the processor is further configured to execute the one or more instructions to perform, by referring to an endpoint included in the join response, a communication connection to a chat room server that provides a chat room service in association with the chat room.

4. The electronic device of claim 1, wherein the processor is further configured to execute the one or more instructions to:
transmit, to the server, a request to create the chat room corresponding to the program ID when no information about the chat room is obtained from the server in response to the request, and
obtain, in response to the request, information about the created chat room from the server.

5. The electronic device of claim 1, wherein the chat room corresponding to the program ID is among one or more chat rooms and the processor is further configured to execute the one or more instructions to:
control display of a chat room list including the one or more chat rooms,
according to a user input selecting a chat room from the displayed chat room list, control entry to the selected chat room and change a current channel to a content channel corresponding to the selected chat room, and
control display of the selected chat room while content provided on the content channel corresponding to the selected chat room is being displayed.

6. The electronic device of claim 1, wherein the processor is further configured to execute the one or more instructions to:
based on receiving, from a user, a request to share the chat room corresponding to the program ID, transmit, to the server, the request to share the chat room,
receive, from the server, chat room access information to allow access to the chat room corresponding to the program ID, and
transmit the received chat room access information to a mobile device that is to share the chat room.

7. The electronic device of claim 6, wherein the processor is further configured to execute the one or more instructions to:
generate a quick response (QR) code based on a uniform resource locator (URL) included in the chat room access information, and
control display of the generated QR code so that the generated QR code is capturable by the mobile device,
wherein the QR code is captured by the mobile device and is useable by the mobile device to transmit a join request to a chat room server.

8. The electronic device of claim 1, wherein the processor is further configured to execute the one or more instructions to:
provide an icon that enables sharing of the chat room with another user,
receive, from the server, chat room sharing information according to a user input selecting the icon, and
transmit the received chat room sharing information to an electronic device of the other user.

9. The electronic device of claim 8, wherein
the chat room sharing information comprises a URL generated based on the information about the chat room, and
the URL is transmitted to the electronic device of the other user via a mobile device of the user and a mobile device of the other user.

10. The electronic device of claim 1, wherein the processor is further configured to execute the one or more instructions so that the program associated with the content is recognized by using at least one of automatic content recognition (ACR), context awareness, or program recognition using information included in metadata.

11. An operation method of an electronic device, the operation method comprising:
recognizing a program associated with content to be displayed;
requesting a server for information about a chat room corresponding toa program identity (ID) of the recognized program; and
outputting, based on the information about the chat room being obtained from the server in response to the request, a user interface to allow control as to whether to execute the chat room corresponding to the program ID of the recognized program while the content is being displayed.

12. The operation method of claim 11, further comprising
receiving, through the user interface, a user input requesting execution of the chat room,
transmitting, to the server, a request to join the chat room according to the user input, and
receiving, from the server, a join response indicating joining of the chat room.

13. The operation method of claim 12, further comprising performing, by referring to an endpoint included in the join response, a communication connection to a chat room server that provides a chat room service in association with the chat room.

14. The operation method of claim 11, further comprising,
transmitting, to the server, a request to create the chat room corresponding to the program ID when no information about the chat room is obtained from the server in response to the request, and
obtaining, in response to the request, information about the created chat room from the server.

15. A non-transitory computer-readable recording medium having recorded thereon a program executable by a computer, the program including one or more instructions to perform an operation method of an electronic device, the operation method comprising:
recognizing a program associated with content to be displayed;
requesting a server for information about a chat room corresponding to a program identity (ID) of the recognized program; and
outputting, based on obtaining the information about the chat room being obtained from the server in response to the request, a user interface to allow control as to whether to execute the chat room corresponding to the program ID of the recognized program while the content is being displayed.
